# EUROPEAN PATENT SPECIFICATION

(11) **EP 4 505 455 B1**
(45) Date of publication and mention of the grant of the patent: **26.08.2026**
(21) Application number: 23803836.8
(22) Date of filing: 10.05.2023
(51) Int. Cl.: G10L 25/63, G10L 21/0332, G10L 25/03, G11B 27/031, H04S 7/00, G10L 21/0316, G10L 25/33, G10L 21/0272

(54) **METHOD AND SYSTEM FOR MODIFYING AUDIO CONTENT FOR LISTENER**
VERFAHREN UND SYSTEM ZUR MODIFIZIERUNG VON AUDIOINHALT FÜR ZUHÖRER
PROCÉDÉ ET SYSTÈME DE MODIFICATION DE CONTENU AUDIO POUR AUDITEUR

(30) Priority: 11.05.2022 IN 202211027231
(43) Date of publication of application: 12.02.2025
(73) Proprietor: Samsung Electronics Co., Ltd., Suwon-si, Gyeonggi-do 16677 (KR)
(72) Inventor: MEENA, Natasha, Suwon-si, Gyeonggi-do, 16677 (IN); SINGH, Avinash, Suwon-si, Gyeonggi-do, 16677 (IN); AGGARWAL, Mayur, Suwon-si, Gyeonggi-do, 16677 (IN)
(74) Representative: Gulde & Partner
(86) International application number: PCT/KR2023/006341
(87) International publication number: WO 2023/219413

(56) References cited:
- WO-A1-2015/008931
- US-A1- 2004 111 171
- US-A1- 2007 190 931
- US-A1- 2009 304 205
- US-A1- 2011 286 593
- US-A1- 2019 228 029
- US-A1- 2020 351 566
- OSPITIA-MEDINA YESID ET AL: "Fuzzy Approach for Emotion Recognition in Music", 2020 IEEE CONGRESO BIENAL DE ARGENTINA (ARGENCON), IEEE, 1 December 2020 (2020-12-01), pages 1 - 7, XP033958140, DOI: 10.1109/ARGENCON49523.2020.9505382

## Description

### [Technical Field]

The disclosure generally relates to modifying audio content, and particularly relates to modifying the audio content based on a preference of a listener.

### [Background Art]

Sometimes while watching content, user prefers hearing some portion of audio at higher volume while others at lower volume. Further, of the available content, users may like or dislike certain media objects.

Currently, a number of multimedia devices such as televisions and soundbars are using object-based media transfer and rendering techniques. Object based media communication provide more flexibility in comparison to channel-based system. For each multimedia scene, audio and video objects can be analyzed and encoded in a special way to provide better user experience.

Also, there are some technologies available in the market to manage audio for better user experience. The technologies comprises source separation and emotion based processing.

Source separation is a technique to separate an audio into individual components. There are numerous existing technologies for source-separation, working mostly based on UNET architecture model.

Emotion Based Processing is a tremendous increase in making the technology more personalized by making the features more emotion oriented. Existing well-established solutions of emotion detection via audio as well as video (combined or individually) exist using CNN which utilize objective audio/video features to detect emotion contained in them.

However there are some limitations, such as individuality of audio objects is not focused. The existing solution in this field focus mainly on modifying entire audio parts. As an example: In children specific content, the content marked as adult is either entirely muted or the frames are completely removed. There is no technology which takes into account user's emotion profile to automatically enhance, reduce or mute a particular audio object.

Prior technologies do not include a method to detect a preference of a listener and modify the audio based on that preference. Further, prior technologies do not include a method to selectively modify some parts of an audio with respect to an effect of the part on the audio.

US 2019/228029 A1 discloses a system that provides sentiment-based feedback relating to media whereby user feedback relating to media is received in order to generate information relating to user sentiment.

US 2011/286593 A1 discloses methods and apparatuses for adjusting audio content based on a ranking. The ranking may be based on a predefined class, such as a type of audio.

OSPITIA-MEDINA YESID ET AL: "Fuzzy Approach for Emotion Recognition in Music", 2020 IEEE CONGRESO BIENAL DE ARGENTINA (ARGENCON), IEEE, 1 December 2020 (2020-12-01), pages 1-7, XP033958140, DOI 10.1109/ARGENCON49523.2020.9505382, discloses a classification technique for emotion recognition in music.

There is a need for a solution to overcome the above-mentioned drawbacks.

### [Disclosure]

### [Technical Solution]

This summary is provided to introduce a selection of concepts in a simplified format that are further described in the detailed description of the present disclosure. This summary is not intended to identify key or essential inventive concepts of the claimed subject matter, nor is it intended for determining the scope of the claimed subject matter. In accordance with the purposes of the disclosure, the present disclosure as embodied and broadly described herein, describes method and system modifying audio content for a listener.

In accordance with some example embodiments of the inventive concepts, a method for modifying audio content for a listener is disclosed. The method includes, determining a crisp emotion value defining an audio object emotion for each audio object among a plurality of audio objects associated with the audio content, wherein determining the crisp emotion value for each audio object comprises: mapping an audio object emotion level for each audio object on a common scale to determine a range of the audio object emotion in each audio object, wherein the common scale comprises the plurality of basic emotions; determining a bias for the audio object emotion level for each audio object, wherein the bias is a least value of the range; and adding the audio object emotion level associated with each audio object mapped on the common scale to the bias to determine the crisp emotion value for each audio object. The method includes determining a composition factor representing one or more basic emotions in the crisp emotion value of each audio object among a plurality of basic emotions. The method includes calculating a probability of the listener associating with each of the one or more basic emotions represented in the composition factor. The method includes calculating a priority value associated with each audio object based on the probability of the listener associating with each of the one or more basic emotions represented in the composition factor of each audio object and the composition factor of each audio object. The method further includes generating a list comprising the plurality of audio objects arranged in a specified order with respect to the priority value associated with each audio object among the plurality of audio objects. The method also includes modifying the audio content by adjusting a gain associated with at least one audio object among the plurality of audio objects in the list, based on the priority value.

In accordance with some example embodiments of the inventive concepts, a system for modifying audio content is disclosed. The system includes a crisp emotion value determination engine configured to determine a crisp emotion value defining an audio object emotion for each audio object among a plurality of audio objects associated with the audio content, wherein determining the crisp emotion value for each audio object comprises: mapping an audio object emotion level for each audio object on a common scale to determine a range of the audio object emotion in each audio object, wherein the common scale comprises the plurality of basic emotions; determining a bias for the audio object emotion level for each audio object, wherein the bias is a least value of the range; and adding the audio object emotion level associated with each audio object mapped on the common scale to the bias to determine the crisp emotion value for each audio object. The system includes an adaptive composition factor determination engine configured to determine a composition factor representing one or more basic emotions in the crisp emotion value of each audio object among a plurality of basic emotions. The system includes an audio object modification engine configured to calculate a probability of the listener associating with each of the one or more basic emotions represented in the composition factor. The audio object modification engine is configured to calculate a priority value associated with each audio object based on the probability of the listener associating with each of the one or more basic emotions represented in the composition factor of each audio object and the composition factor of each audio object. The audio object modification engine is further configured to generate a list comprising the plurality of audio objects arranged in a specified order with respect to the priority value associated with each audio object among the plurality of audio objects. The audio object modification engine is also configured to modify the audio content by adjusting a gain associated with at least one audio object among the plurality of audio objects in the list, based on the priority value.

These aspects and advantages will be more clearly understood from the following detailed description taken in conjunction with the accompanying drawings and claims.

### [Description of Drawings]

FIG. 1 illustrates a flow diagram depicting a method for modifying audio content, in accordance with an embodiment of the disclosure;
FIG. 2 illustrates a schematic block diagram of a system for modifying audio content, in accordance with an embodiment of the disclosure;
FIG. 3 illustrates an operational flow diagram depicting a process for modifying audio content, in accordance with an embodiment of the disclosure;
FIG. 4 illustrates an architectural diagram depicting a method for modifying audio content, in accordance with an embodiment of the disclosure;
FIG. 5a illustrates an operational flow diagram depicting a process for generating a number of audio objects, in accordance with an embodiment of the disclosure;
FIG. 5b illustrates a diagram depicting a U-Net source-separation model, in accordance with an embodiment of the disclosure;
FIG. 5c illustrates a graphical representation of usage of the memory by the U-Net source-separation model, in accordance with an embodiment of the disclosure;
FIG. 5d illustrates a diagram depicting a generation of the number of audio objects in the audio content, in accordance with an embodiment of the disclosure;
FIG. 6a illustrates an operational flow diagram depicting a process for determining an emotion level related to a number of audio objects, in accordance with an embodiment of the disclosure;
FIG. 6b illustrates a diagram depicting a determination of the emotion level associated with the number of audio objects, in accordance with an embodiment of the disclosure;
FIG. 7a illustrates an operational flow diagram depicting a process for determining a crisp emotion value associated with each audio object of audio content, in accordance with an embodiment of the disclosure;
FIG. 7b illustrates a common scale, in accordance with an embodiment of the disclosure;
FIG. 7c illustrates a common scale with the audio object emotion mapped on the common scale to a fixed preset range, in accordance with an embodiment of the disclosure;
FIG. 7d illustrates a diagram depicting a determination of the crisp emotion value, in accordance with an embodiment of the disclosure;
FIG. 8a illustrates an operational flow diagram depicting a process for determining a composition factor, in accordance with an embodiment of the disclosure;
FIG. 8b illustrates a kernel scale, in accordance with an embodiment of the disclosure;
FIG. 8c illustrates a modified kernel scale based on the feedback from the listener, in accordance with an embodiment of the disclosure;
FIG. 8d illustrates an embodiment of the kernel scale depicting a location of the crisp emotion on the kernel scale, in accordance with an embodiment of the disclosure;
FIG. 8e illustrates a diagram depicting the composition factor as the output based on the feedback of the listener and the crisp emotion value for each audio object, in accordance with an embodiment of the disclosure;
FIG. 8f illustrates a graphical representation depicting a height of the at least one adaptive emotion kernel, in accordance with an embodiment of the disclosure.
FIG. 9a illustrates an operational flow diagram depicting a process for an audio object prioritization and gain adjustment, in accordance with an embodiment of the disclosure;
FIG. 9b illustrates a diagram depicting the audio object prioritization and the gain adjustment for generating the modified audio content, in accordance with an embodiment of the disclosure;
FIG. 10 illustrates an architectural diagram of a method to modify audio content comprising another number of basic emotions, in accordance with an embodiment of the disclosure;
FIG. 11 illustrates a use case diagram depicting a scenario for modifying audio content by enhancing a voice of a singer, in accordance with an embodiment of the disclosure;
FIG. 12 illustrates a use case diagram depicting a scenario of a listener being unable to modify audio content, in accordance with an existing prior-art and a scenario of the listener modifying the audio content, in accordance with an embodiment of the disclosure;
FIG. 13 illustrates a use case diagram depicting a scenario of a listener modifying audio content by managing one or more audio objects, in accordance with an embodiment of the disclosure;
FIG. 14 illustrates a use case diagram depicting a scenario of a listener controlling one or more audio objects of audio content, in accordance with an embodiment of the disclosure;
FIG. 15 illustrates a use case diagram depicting a scenario of a listener enhancing vocals and suppressing a BGM from audio content, in accordance with an embodiment of the disclosure;
FIG. 16 illustrates a use case diagram depicting a scenario of an enhancement of a musical part in audio content, in accordance with an embodiment of the disclosure;
FIG. 17 illustrates a use case diagram depicting a scenario where audio content may be personalized based on an emotion associated with the audio content, in accordance with an embodiment of the disclosure;
FIG. 18 illustrates a use case diagram depicting a scenario of automatic enhancement of vocals/beats in audio content, in accordance with an embodiment of the disclosure.

Further, skilled artisans will appreciate that elements in the drawings are illustrated for simplicity and may not have been necessarily drawn to scale. For example, the flow charts illustrate the system in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having benefit of the description herein.

### [Mode for Invention]

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or system that comprises a list of steps does not include only those steps but may include other steps not expressly listed or inherent to such process or system. Similarly, one or more devices or sub-systems or elements or structures or components proceeded by "comprises.. a" does not, without more constraints, preclude the existence of other devices or other sub-systems or other elements or other structures or other components or additional devices or additional sub-systems or additional elements or additional structures or additional components.

Unless otherwise defined, all technical and scientific terms used herein have the same meaning as commonly understood by one of ordinary skilled in the art to which this invention belongs. The system, systems, and examples provided herein are illustrative only and not intended to be limiting.

Embodiments of the disclosure are described below in detail with reference to the accompanying drawings.

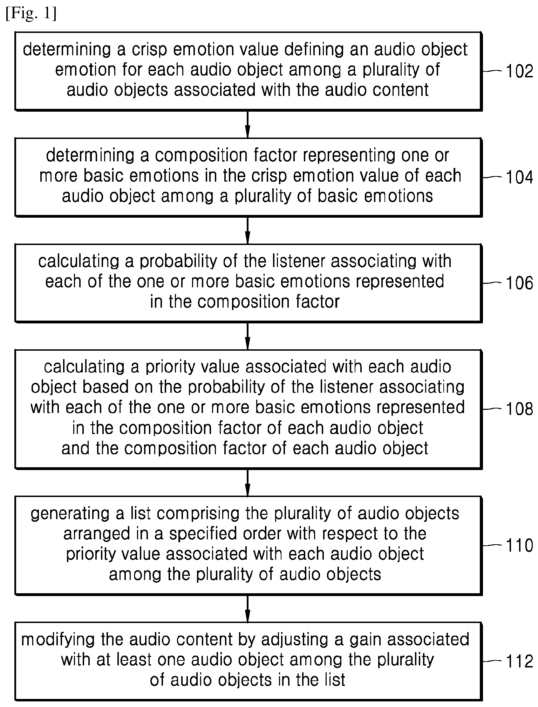

FIG. 1 illustrates a flow diagram depicting a method for modifying audio content, in accordance with an embodiment of the disclosure. Referring to FIG. 1, in an embodiment, the audio content may be modified based on one or more preferences of a listener listening to the audio content. Examples of the audio content may include, but are not limited to, a song, a speech, a narration, and a live coverage of an event. In an embodiment, the audio content may be fetched from a video for modification. In an embodiment, the modification of the audio content may include enhancing or reducing an effect of at least one aspect of the audio content. In an embodiment the at least one aspect may include, a background voice, a tune being played along with the audio content, a background noise, or the like.

In accordance with an embodiment of the disclosure, at step 102, the method 100 includes determining, a crisp emotion value defining an audio object emotion for each audio object among a plurality of audio objects associated with the audio content.

Further, at step 104, the method 100 includes determining a composition factor representing one or more basic emotions in the crisp emotion value of each audio object among a plurality of basic emotions.

At step 106, the method 100 includes calculating a probability of the listener associating with each of the one or more basic emotions represented in the composition factor.

At step 108 the method 100 proceeds towards calculating a priority value associated with each audio object based on the composition factor of each audio object and the probability of the listener associating with each of the one or more basic emotions represented in the composition factor of each audio object.

At step 110, the method 100 proceeds towards generating a list comprising the plurality of audio objects arranged in a specified order with respect to the priority value associated with each audio object among the plurality of audio objects.

At step 112, the method 100 includes modifying the audio content by adjusting a gain associated with at least one audio object among the plurality of audio objects in the list.

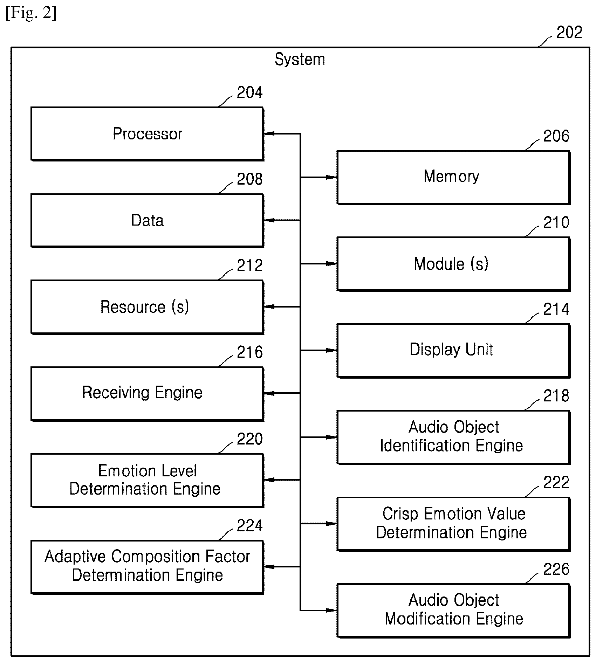

FIG. 2 illustrates a schematic block diagram of a system 202 for modifying audio content, in accordance with an embodiment of the disclosure. Referring to FIG. 2, in an embodiment, the system 202 may be incorporated in a User Equipment (UE). Examples of the UE may include, but not limited to, a television (TV), a laptop, a tab, a smart phone, and a Personal Computer (PC). Examples of the audio content may include, but are not limited to, a song, a speech, a narration, and a live coverage of an event. In an embodiment, the audio content may be fetched from a video for modification. In an embodiment, the modification may be based on separating the audio content into a number of audio objects and changing a magnitude of at least one audio object in the audio content. In an embodiment, changing the magnitude may include adjusting a gain associated with the at least one audio object. In an embodiment, adjusting the gain may result in one or more of reducing a magnitude of the at least one audio object, increasing the magnitude of the at least one audio object, and removing the at least one audio object from the audio content. In an embodiment, the modification may be based on one or more preferences of a listener of the audio.

The system 202 may include a processor 204, a memory 206, data 208, module (s) 210, resource (s) 212, a display unit 214, a receiving engine 216, an audio object identification engine 218, an emotion level determination engine 220, a crisp emotion value determination engine 222, an adaptive composition factor determination engine 224, and an audio object modification engine 226.

In an embodiment, the processor 204, the memory 206, the data 208, the module (s) 210, the resource (s) 212, the display unit 214, the receiving engine 216, the audio object identification engine 218, the emotion level determination engine 220, the crisp emotion value determination engine 222, the adaptive composition factor determination engine 224, and the audio object modification engine 226 may be electrically and/or physically connected to each other..

As would be appreciated, the system 202, may be understood as one or more of a hardware, a software, a logic-based program, a configurable hardware, and the like. In an example, the processor 204 may be a single processing unit or a number of units, all of which could include multiple computing units. The processor 204 may be implemented as one or more microprocessors, microcomputers, microcontrollers, digital signal processors, central processing units, processor cores, multi-core processors, multiprocessors, state machines, logic circuitries, application-specific integrated circuits, field-programmable gate arrays and/or any devices that manipulate signals based on operational instructions. Among other capabilities, the processor 204 may be configured to fetch and/or execute computer-readable instructions and/or data stored in the memory 206.

In an example, the memory 206 may include any non-transitory computer-readable medium known in the art including, for example, volatile memory, such as static random access memory (SRAM) and/or dynamic random access memory (DRAM), and/or non-volatile memory, such as read-only memory (ROM), erasable programmable ROM (EPROM), flash memory, hard disks, optical disks, and/or magnetic tapes. The memory 206 may include the data 208. The data 208 serves, among other things, as a repository for storing data processed, received, and generated by one or more of the processor 204, the memory 206, the data 208, the module (s) 210, the resource (s) 212, the display unit 214, the receiving engine 216, the audio object identification engine 218, the emotion level determination engine 220, the crisp emotion value determination engine 222, the adaptive composition factor determination engine 224, and the audio object modification engine 226.

The module(s) 210, among other things, may include routines, programs, objects, components, data structures, etc., which perform particular tasks or implement data types. The module(s) 210 may also be implemented as, signal processor(s), state machine(s), logic circuitries, and/or any other device or component that manipulate signals based on operational instructions.

Further, the module(s) 210 may be implemented in hardware, as instructions executed by at least one processing unit, e.g., processor 204, or by a combination thereof. The processing unit may be a general-purpose processor that executes instructions to cause the general-purpose processor to perform operations or, the processing unit may be dedicated to performing the required functions. In another aspect of the present disclosure, the module(s) 210 may be machine-readable instructions (software) which, when executed by a processor/processing unit, may perform any of the described functionalities.

In some example embodiments, the module(s) 210 may be machine-readable instructions (software) which, when executed by a processor 204/processing unit, perform any of the described functionalities.

The resource(s) 212 may be physical and/or virtual components of the system 202 that provide inherent capabilities and/or contribute towards the performance of the system 202. Examples of the resource(s) 212 may include, but are not limited to, a memory (e.g.., the memory 206), a power unit (e.g., a battery), a display unit (e.g., the display unit 214) etc. The resource(s) 212 may include a power unit/battery unit, a network unit, etc., in addition to the processor 204, and the memory 206.

The display unit 214 may display various types of information (for example, media contents, multimedia data, text data, etc.) to the system 202. The display unit 214 may include, but is not limited to, a liquid crystal display (LCD), a light-emitting diode (LED) display, an organic LED (OLED) display, a plasma cell display, an electronic ink array display, an electronic paper display, a flexible LCD, a flexible electrochromic display, and/or a flexible electrowetting display.

In an example, the receiving engine 216, the audio object identification engine 218, the emotion level determination engine 220, the crisp emotion value determination engine 222, the adaptive composition factor determination engine 224, and the audio object modification engine 226, among other things, include routines, programs, objects, components, data structures, etc., which perform particular tasks or implement data types. The receiving engine 216, the audio object identification engine 218, the emotion level determination engine 220, the crisp emotion value determination engine 222, the adaptive composition factor determination engine 224, and the audio object modification engine 226 may also be implemented as, signal processor(s), state machine(s), logic circuitries, and/or any other device or component that manipulate signals based on operational instructions. Further, the receiving engine 216, the audio object identification engine 218, the emotion level determination engine 220, the crisp emotion value determination engine 222, the adaptive composition factor determination engine 224, and the audio object modification engine 226 can be implemented in hardware, instructions executed by a processing unit, or by a combination thereof. The processing unit can comprise a computer, a processor, such as the processor 204, a state machine, a logic array or any other suitable devices capable of processing instructions. The processing unit can be a general-purpose processor which executes instructions to cause the general-purpose processor to perform the required tasks or, the processing unit can be dedicated to performing the required functions.

In an embodiment, the receiving engine 216 may be configured to receive the audio content. In an embodiment, the receiving engine 216 may be configured to receive the audio content as an input. In an embodiment, the receiving engine 216 may be configured to receive a video and fetch the audio content from the video by processing the video.

Continuing with the above embodiment, the audio object identification engine 218 may be configured to separate the audio content into the number of audio objects. In an embodiment, the audio object identification engine 218 may be configured to separate the audio content by pre-processing the input to generate a pre-processed audio content. Further, upon pre-processing, the audio object identification engine 218 may be configured to feed the pre-processed audio content to a U-Net based source-separation model to generate a number of outputs. Moving forward, the audio object identification engine 218 may be configured to perform a post processing on the number of outputs to generate the number of audio objects associated with the audio content from the audio content.

In response to separation of the audio content into the number of audio objects by the audio object identification engine 218, the emotion level determination engine 220 may be configured to determine an audio object emotion level related to each audio object among the number of audio objects. Examples of the audio object emotion may include, but are not limited to, an admiration, an adoration, an appreciation, an amusement, an anger, an anxiety, an awe, an awkwardness, a boredom, a calmness, a confusion, a craving, a disgust, and an empathic pain. In an embodiment, the audio object emotion level determination for each audio object by the emotion level determination engine 220 may include determining one or more audio features associated with each audio object.

In an embodiment, the one or more audio features may include a basic frequency, a time variation characteristic of a frequency, a Root Mean Square (RMS) value associated with an amplitude, and a voice speed associated with each audio object. In response to determining the one or more audio features, the emotion level determination engine 220 may be configured to determine an emotion probability value associated with each audio object based on the one or more audio features. Continuing with the above embodiment, the emotion level determination engine 220 may be configured to determine the audio object emotion level associated with each audio object based on the emotion probability value.

Continuing with the above embodiment, upon separation of the audio content into the number of audio objects and identification of the audio object emotion level for each of the number of audio object, the crisp emotion value determination engine 222 may be configured to determine a crisp emotion value for each audio object. In an embodiment, the crisp emotion value may define an audio object emotion level for each of the number of audio objects related to the audio content. In an embodiment, for determining the crisp emotion value, the crisp emotion value determination engine 222 may be configured to map the audio object emotion level for each audio object on a common scale to determine a range of the audio object emotion in each audio object. In an embodiment the common scale may include a number of basic emotions. Examples of the number of basic emotions may be 5, the basic emotions may include an extremely sad emotion, a sad emotion, a normal emotion, a happy emotion, and an extremely happy emotion. In an embodiment, the number of basic emotions may be not limited to, the number of basic emotions may vary between 4 and 27. Further, the common scale may be one of a hedonic scale and an arousal scale comprising the number of basic emotions.

To that understanding, in response to determining the range, the crisp emotion value determination engine 222 may be configured to determine a bias for the audio object emotion level for each audio object. In an embodiment, the bias may be a least value of the range as determined above. Furthermore, the crisp emotion value determination engine 222 may be configured to add the audio object emotion level associated with each audio object mapped on the common scale to the bias to determine the crisp emotion value for each audio object.

Continuing with the above embodiment, upon determination of the crisp emotion value for each audio object related to the audio content, the adaptive composition factor determination engine 224 may be configured to determine a composition factor representing one or more basic emotions in the crisp emotion value of each audio object. In an embodiment, the one or more basic emotions may be among the number of basic emotions.

To that understanding, in order to determine the composition factor representing the one or more basic emotion, the adaptive composition factor determination engine 224 may be configured to map the crisp emotion value for each audio object on a kernel scale. In an embodiment, the kernel scale may include a number of adaptive emotion kernels representing the number of basic emotions. In an embodiment, the composition factor representing the one or more basic emotions may be based on a contribution of the one or more basic emotions represented by one or more adaptive emotion kernels in the crisp emotion value for each audio object. In an embodiment, the contribution of the one or more basic emotions may be determined based on a placement of the crisp emotion value for each audio object on the one or more adaptive emotion kernels upon mapping.

Subsequently in an embodiment, the adaptive composition factor determination engine 224 may be configured to adjust a size of at least one adaptive emotion kernel among the number of adaptive emotion kernels. In an embodiment, the size may be adjusted based on a number of feedback parameters related to the listener. Examples of the number of feedback parameters may include, but are not limited to, a visual feedback, a sensor feedback, a prior feedback, and a manual feedback related to with the listener. In an embodiment, the adaptive composition factor determination engine 224 may be configured to obtain the number of feedback parameters from at least one of the memory 206 or the listener in real-time. In an embodiment, the number of feedback parameters may be pre-stored in the memory 206. In an embodiment, the listener may be presented with an interface on the UE to share the number of feedback parameters with the system 202.

To that understanding, upon obtaining the number of feedback parameters, the adaptive composition factor determination engine 224 may be configured to adjust the size of the at least one adaptive emotion kernel. In an embodiment, adjusting the size may include increasing or decreasing one or more parameters associated with a shape of the at least one adaptive emotion kernel. Examples of the one or more parameters may include, but are not limited to, a slope, a height, a length, a width, a radius, and an angle of the at least one adaptive emotion kernel.

In an embodiment, where it is determined that the at least one adaptive emotion kernel is in the shape of a trapezium, adjusting the size may include increasing or decreasing one or more of the slope and the height of the at least one adaptive emotion kernel. In an embodiment, where it is determined that the at least one adaptive emotion kernel is in a rectangular shape, adjusting the size may include increasing or decreasing one or more of the length and the width of the at least one adaptive emotion kernel. In an embodiment, where it is determined that the at least one adaptive emotion kernel is in a circular shape, adjusting the size may include increasing or decreasing the radius of the at least one adaptive emotion kernel. In an embodiment, where it is determined that the at least one adaptive emotion kernel is in a triangular shape, adjusting the size may include increasing or decreasing one of the angle and the height of the at least one adaptive emotion kernel.

In an embodiment, increasing the size of the at least one adaptive emotion kernel may indicate that a mood of the listener is similar to at least one basic emotion represented by the at least one adaptive emotion kernel. Further, in an embodiment, decreasing the size of the at least one adaptive emotion kernel may indicate that the mood of the listener is not similar to the at least one basic emotion represented by the at least one adaptive emotion kernel.

Subsequent to determination of the composition factor representing the one or more basic emotion, the audio object modification engine 226 may be configured to calculate a probability of the listener associating with each of the one or more basic emotions represented in the composition factor. In an embodiment, the probability may be calculated by the audio object modification engine 226 based on one of the number of feedback parameters related to the listener and a ratio of an area of the one or more adaptive emotion kernels corresponding to each basic emotion represented in the composition factor and a total area of the number of adaptive emotion kernels of the number of basic emotions.

Continuing with the above embodiment, upon calculating the probability, the audio object modification engine 226 may be configured to calculate a priority value related to each audio object. In an embodiment, the priority value may be based on the probability of the listener associating with each of the one or more basic emotions represented in the composition factor of each audio object and the composition factor representing the one or more basic emotions. In an embodiment, the audio object modification engine 226 may be configured to calculate the priority value by performing a weighted summation of the probability of the listener associating with each basic emotion represented in the composition factor and the composition factor representing the one or more basic emotions. Moving forward, the audio object modification engine 226 may be configured to generate a list comprising the number of audio objects arranged in a specified order with respect to the priority value associated with each audio object among the number of audio objects.

Continuing with the above embodiment, the audio object modification engine 226 may be configured to modify the audio content by adjusting a gain associated with at least one audio object among the number of audio objects in the list. In an embodiment, the audio object modification engine 226 may be configured to perform one or more of a number of steps. In an embodiment, the number of steps may include:
assigning the gain of one to an audio object in the list corresponding to a highest priority value and the gain of zero to another audio object in the list corresponding to a lowest priority value. In an embodiment, assigning the gain of zero may indicate that the other audio object is removed from the audio content.
assigning the gain of a non-zero value to the audio object corresponding to a lowest priority value and the gain of one to an audio object corresponding to a highest priority value. In an embodiment, assigning the gain of the non-zero value may indicate that an effect the audio object is changed. In an embodiments, assigning the gain of a value less than 1 and greater than 0 may have an effect of making the audio object sound smaller.

Continuing with the above embodiment, upon performing the one or more of the number of steps, the audio object modification engine 226 may be configured to calculate the gain associated with one or more audio objects in the list other than the audio object with the highest priority value and the other audio object with the lowest priority value. In an embodiment, the gain associated with the one or more audio objects may be calculated based on the gain associated with the audio object with a priority value higher than the one or more audio objects and the gain associated with the audio object with a priority value lower than the one or more audio objects. In an embodiment, the audio object modification engine 226 may be configured to assign a gain of an audio object that is between the audio object with the highest priority value and the audio object with the lowest priority value in the list as a value between the highest priority value and the lowest priority value, in order of priority. Moving forward, the audio object modification engine 226 may be configured to perform a weighted summation of the gain associated with each audio object in the list for modifying the audio content. Upon modification of the at least one audio object, the audio object modification engine 226 may be configured to combine the number of modified audio objects to generate a modified audio content.

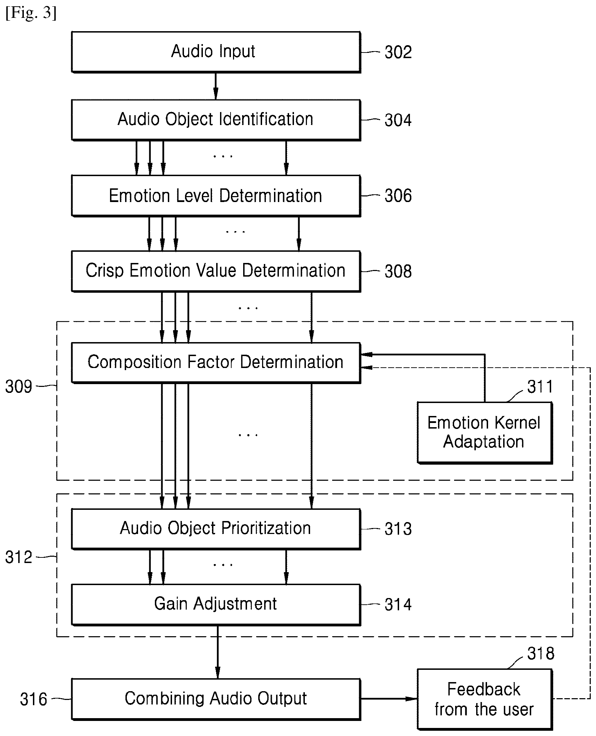

FIG. 3 illustrates an operational flow diagram depicting a process for modifying audio content, in accordance with an embodiment of the disclosure. Referring to FIG. 3, examples of the audio content may include, but are not limited to, a song, a speech, a narration, and a live coverage of an event. In an embodiment, the audio content may be fetched from a video for modification. In an embodiment, the modification may be based on separating the audio content into a number of audio objects and changing a magnitude of at least one audio object in the audio content. In an embodiment, changing the magnitude may include adjusting a gain associated with the at least one audio object. In an embodiment, adjusting the gain may result in one or more of reducing a magnitude of the at least one audio object, increasing the magnitude of the at least one audio object, and removing the at least one audio object from the audio content. In an embodiment, the modification may be based on one or more preferences of a listener of the audio.

Continuing with the above embodiment, at step 302, the process may include receiving the audio content as an input.

At step 304, the process may include performing an audio object identification for the audio content. The audio object identification may include separating the audio content into "N" audio objects using 'lite' source-separation techniques. In an embodiment, the 'lite' source-separation techniques may refer to source separation techniques that be supported by the UE. In an embodiment, the process may include identifying audio emitting objects in the audio/video content. In an embodiment, a particular Audio/Video content may have a human, a drum and car horns as the audio emitting objects. In an embodiment, the "N" audio objects may be the number of audio objects as referred in the fig. 1 and fig. 2. In an embodiment, the separation may be performed by the audio object identification engine 218 as referred in the fig. 2. In an embodiment, the 'lite' source separation techniques may be used for separation of the audio content to identify individual audio objects present in the input such as vocals, background music, or the like.

At step 306, the process may include performing an emotion level determination for determining an audio object emotion level and an audio object emotion related to each of the number of audio objects. In an embodiment, the audio object emotion may also interchangeably be referred as an emotion. In an embodiment, the audio object emotion level may be determined using the emotion level determination engine 220 as referred in the fig. 2. In an embodiment, each audio object may include required information as follows: (human, comic, 7); (drum, happy, 5); (Car Horns, anger, 2). In an embodiment, the audio object emotion level may be a factor between 0 and 10 representing an extremeness of the audio object emotion contained in the object.

At step 308, the process may include performing a crisp emotion value determination for determining a crisp emotion value related to each audio object by remapping the audio object emotion level related to each of the number of audio objects to a common scale of a number of basic emotions by adding a fixed bias. A value of the emotion in common scale is referred to as the crisp emotion value. In an embodiment, the crisp emotion value may be determined by the crisp emotion value determination engine 222 as referred in the fig. 2. In an embodiment, the basic emotions may include an extremely sad emotion, a sad emotion, a normal emotion, a happy emotion, and an extremely happy emotion. The audio object emotion level of each audio object may be mapped to a crisp emotion value by adding the bias value to the audio object emotion level of each audio object.

At step 309, the process may include performing an adaptive composition factor determination. At step 309, the process may include a step 310 and 311. At step 310, the process performing a composition factor determination for determining a composition of each basic emotion in an audio object emotion by using a number of adaptive emotion kernels. In an embodiment, the composition may be a composition factor as referred in the fig. 1 and fig. 2. In an embodiment, the composition may be based on a shape related to each of the number of adaptive emotion kernels and the crisp emotion value of each audio object. At step 311, the process performing an emotion kernel adaptation. At step 311, the number of adaptive emotion kernels may be modified based on feedback from the listener. In an embodiment, for a Yes/No based feedback from the listener, one or more parameters of at least one adaptive emotion kernel increase or decrease by a small positive constant amount (Δ). In an embodiment, the composition factor may be determined by the adaptive composition factor determination engine 224 as referred in the fig. 2. In an embodiment, the composition factor determined for each audio object emotion may be represented as factor of the number of basic emotions compositions.

At step 312, the process may include performing an audio object modification. At step 312, the process may include a step 313 and 314. At step 313, the process performing an audio object prioritization associated with the number of audio objects. The audio object prioritization may include determining a probability of the listener liking to watch a particular emotion, and a priority value related to each audio object with respect to a preference of each audio object by a listener based on the probability. For determining the priority value, the composition factor may be used as weights to the probability of the listener liking to watch the particular emotion. A weighted summation of such probabilities may determine the priority value of a particular audio object among the number of audio objects. In an embodiment, the priority value for each audio object may be determined by the audio object modification engine 226 as referred in the fig. 2.

At step 314, the process may include performing a gain adjustment for adjusting gains related to each audio object upon calculating the priority value. In an embodiment, the gain for each audio object may be adjusted to reduce, remove or enhance a particular audio object. In an embodiment, the particular audio object may be the at least one audio object as referred in the fig. 1 and fig. 2. In an embodiment, the gains may be adjusted by the audio object modification engine 226.

At step 316, upon adjusting the gains, the process may include combining the number of audio objects and outputting the audio content with adjusted gains to the listener.

At step 318, the process may include obtaining feedback from the listener to adapt kernel shapes of the number of adaptive emotion kernels. Survey-based feedback may be used to determine a preferred profile of the listener for a particular emotion. In an embodiment, a number of other feedback parameters may also be used to determine the preferred profile of the listener. The number of other feedback parameters may include, visual feedback, prior feedback, sensor feedback, and manual feedback. Feedback may be used to adjust a size of the number of adaptive emotion kernels and also update the probability of the listener liking a particular emotion. In an embodiment, the feedback may be obtained by the composition factor determination engine 224. In an embodiment, adjusting the size may include increasing or decreasing one or more parameters associated with a shape of the number of adaptive emotion kernels. In an embodiment, the one or more parameters may include a slope, a height, a length, a width, a radius, and an angle of the number of adaptive emotion kernels.

In an embodiment, where it is determined that the number of adaptive emotion kernels is in the shape of a trapezium, adjusting the size may include increasing or decreasing one or more of the slope and the height of the number of adaptive emotion kernels. In an embodiment, where it is determined that the number of adaptive emotion kernels is in a rectangular shape, adjusting the size may include increasing or decreasing one or more of the length and the width of the number of adaptive emotion kernels. In an embodiment, where it is determined that the number of adaptive emotion kernels is in a circular shape, adjusting the size may include increasing or decreasing the radius of the number of adaptive emotion kernels. In an embodiment, where it is determined that the number of adaptive emotion kernels is in a triangular shape, adjusting the size may include increasing or decreasing one of the angle and the height of the number of adaptive emotion kernels.

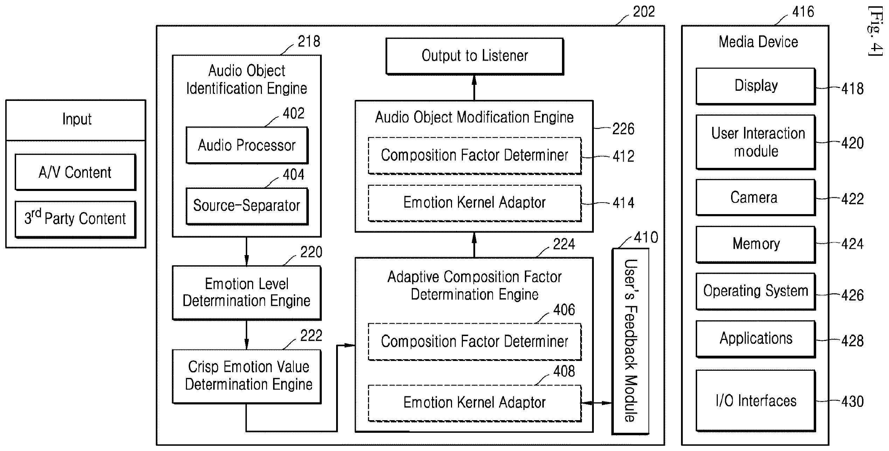

FIG. 4 illustrates an architectural diagram depicting a method for modifying audio content, in accordance with an embodiment of the disclosure. Referring to FIG. 4, in an embodiment, the audio content may be modified based on a preference of a listener listening to the audio content. In an embodiment, the architectural diagram may include the audio object identification engine 218, the emotion level determination engine 220, the crisp emotion value determination engine 222, the adaptive composition factor determination engine 224, and the audio object modification engine 226 as referred in the fig. 2. Further, the architectural diagram may include a media device 416. In an embodiment, the media device 416 may include a display 418, a user interaction module 420, a camera 422, a memory 424, an operating system 426, one or more applications 428, and one or more input/output interfaces 430. In an embodiment, the memory 424 may be the memory 206 as referred in the fig. 2. In an embodiment, the method may be performed by the system 202 deploying the system components of the architectural diagram.

Continuing with the above embodiment, the audio object identification engine 218 may be configured to preprocess an input audio. In an embodiment, the input audio may be the audio content received for modification. Further, the audio object identification engine 218 may be configured to perform pre-processing and a source-separation using a pre-trained model on the audio content. Further, the audio object identification engine 218 may be configured to perform a post processing on an output audio generated upon source separation. Upon post processing, the audio object identification engine 218 may be configured to generate a final output. In an embodiment, the final audio may be a source-separated audio separated into a number of audio objects. In an embodiment, the audio object identification engine 218 may include an audio processor 402 for performing the pre-processing and the post-processing. Further, the audio object identification engine 218 may include a source separator 404 for performing the source separation.

Subsequently, the emotion level determination engine 220 may be configured to determine an audio object emotion and an audio object emotion level related to each of the number of audio objects. Moving forward, the crisp emotion value determination engine 222 may be configured to map the audio object emotion to a common scale based on the audio object emotion value and a predefined mapping values of fixed set of audio object emotions.

To that understanding, the adaptive composition factor determination engine 224 may be configured to determine a composition factor of basic human emotion in identified emotion of audio objects. In an embodiment, the basic human emotion may be among a number of basic emotions as referred in the fig. 2. The adaptive composition factor determination engine 224 may require adaptive emotion kernels adapted according to an emotion response of the listener. In an embodiment, the adaptive emotion kernels may be a number of adaptive emotion kernels as referred in the fig. 2. In an embodiment, the adaptive composition factor determination engine 224 may include a composition factor determiner 406 for determining the composition factor and an emotion kernel adapter 408 for adapting the number of adaptive emotion kernel based on the emotion response of the listener received from a user feedback module 410.

Continuing with the above embodiment, the audio object modification engine 226 may be configured to determine a priority value of each audio object depending on the composition factor and a shape of the adaptive emotion kernels. Further, the audio object modification engine 226 may be configured to adjust gains associated with each audio object to enhance or reduce effect of at least one audio object in the order of the priority related to each of the number of audio objects. In an embodiment, the audio object modification engine 226 may include an audio object prioritization engine 412 for determining the priority value and a gain adjuster 414 for performing the gain adjustment.

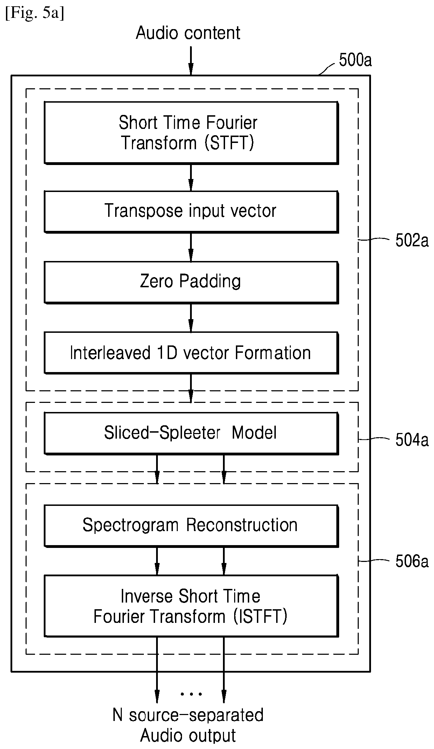

FIG. 5a illustrates an operational flow diagram 500a depicting a process for generating a number of audio objects, in accordance with an embodiment of the disclosure. Referring to FIG. 5a, in an embodiment, audio content may be received as input at the system 202 as referred in the fig. 2 and the audio content may be separated into the number of audio objects as an output. In an embodiment, he output as the number of audio objects may be referred as '*aᵢ*' such that *aᵢ*, 1 ≤ *i* ≤ *N,* 'N' may be the number of audio objects.

In an embodiment, the audio content may be separated into the number of audio objects by the audio object identification engine 218 as referred in the fig. 2. Examples of the number of audio objects may include, but are not limited to, a vocal, a background, a music or the like. In an embodiment, the audio object identification engine 218 may be configured to perform a source-separation on the audio content and to generate N source-separated audio outputs *aᵢ*, 1 ≤ *i* ≤ *N.* In an embodiment, a value of 'N' may depend on a model used for performing the source separation to generate the number of audio objects from the audio content. In an embodiment, the disclosure may utilize a modified version of a U-Net source-separation model. In an embodiment, the "U-Net source-separation model may be a "Spleeter" model.

In an embodiment, the process may include a step 502a. At step 502a, the process may include performing a pre-processing of the audio content in response to receiving the audio content as the input. In an embodiment, the pre-processing may include:
Finding a STFT of the input audio content.

Performing a transpose operation on an input vector of the audio content, zero padding, and interleaving (to bring in expected shape).

Moving forward, the process may include a step 504a. At step 504a, the process may include proceeding towards feeding the pre-processed audio content to the U-Net source-separation model U-Net source-separation model to generate an output based on the pre-processed audio content.

Continuing with the above embodiment, the process may include a step 5-6a. At step 506a, the process may include performing a post-processing on the output generated by the U-Net source-separation model to generate a new output. In an embodiment, the post-processing may include:
A spectrogram reconstruction i.e., accessing interleaved output to construct a 2D vector.

An inverse STFT of the output audio chunk.

In an embodiment, the new output generated may be PCM data related to the source-separated audio content. In an embodiment, a length of the audio content may depend on a minimum length of an input required for processing by the model. In an embodiment, minimum ranges may be in order of seconds.

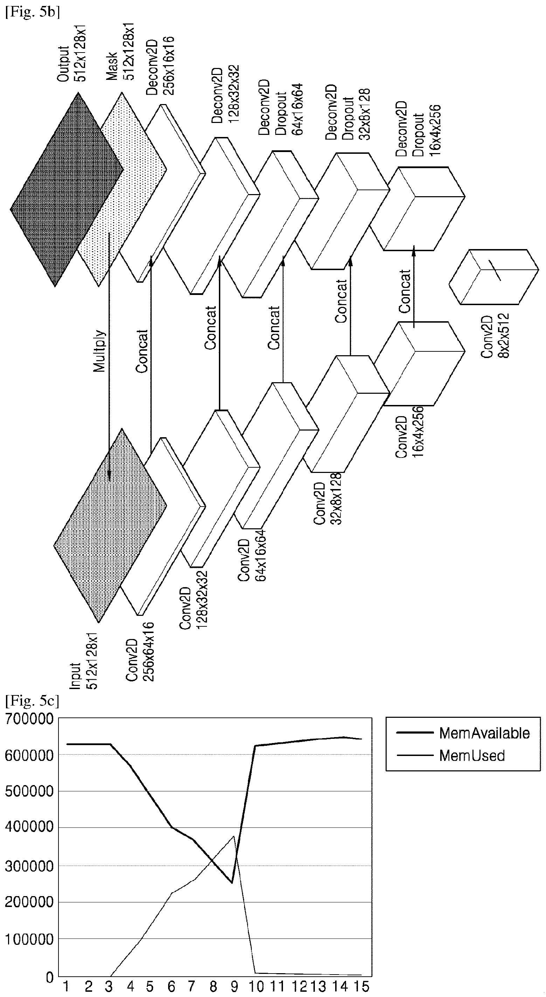

FIG. 5b illustrates a diagram depicting the U-Net source-separation model, in accordance with an embodiment of the disclosure. Referring to FIG. 5b, in an embodiment, a commonly and widely used source-separation model may be a U-Net source-separation model that works based on a UNET architecture, utilizing audio features such as spectrogram. The value of N as mentioned above may depend on a number of stems present in the source-separation model. In an embodiment, the U-Net source-separation model may be configured to generate a minimum of 2 to a maximum of 5 source-separated outputs. In an embodiment, the disclosure employs the modified version of the U-Net source-separation model. In an embodiment, the U-Net source-separation model may be a modified model as used in the disclosure. In an embodiment, modification may include removing one or more unsupported layers/nodes and process the one or more unsupported layers/nodes separately outside a tensorflow lite model as a part of pre-processing. In an embodiment, the modification may further include removing layers from a Spleeter Tensorflow model involving un-supported operators and perform such steps externally using normal mathematical operations. Further, a conversion of the sliced model to the Tensorflow lite may be performed with only built-in Tensorflow -lite operators.

FIG. 5c illustrates a graphical representation of usage of the memory 206 by the U-Net source-separation model, in accordance with an embodiment of the disclosure. Referring to FIG. 5c, in an embodiment, x-axis may be an invoke time, y-axis may be an memory usage. In an embodiment, a memory usage may be a function of model size, remaining majorly constant after the U-Net source-separation model and an interpreter are loaded. Furthermore, an invoke time may be of an order of length of the input audio content. In anembodiment, an 'n' seconds of input may need less than or equal to 'n' seconds of invoke time.

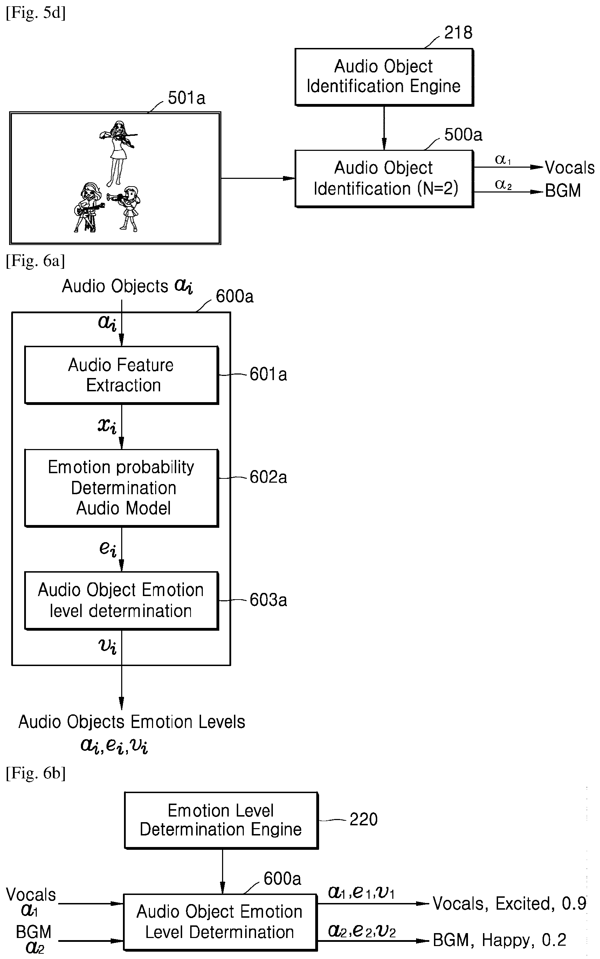

FIG. 5d illustrates a diagram depicting a generation of the number of audio objects in the audio content 501a, in accordance with an embodiment of the disclosure. Referring to FIG. 5d, in an embodiment, the audio content 501a may include two source separated audio objects such as vocals (a1) and Back Ground Music (BGM) (a2). In an embodiment, the two source separated audio objects may be an output of a two stem (N=2) model.

FIG. 6a illustrates an operational flow diagram 600a depicting a process for determining an audio object emotion level related to a number of audio objects, in accordance with an embodiment of the disclosure. Referring to FIG. 6a, in an embodiment, the number of audio objects may be generated by separating audio content. In an embodiment, the audio object emotion level for each audio object may be determined to for further determining a crisp emotion value associated with the number of audio objects. In an embodiment, the audio object emotion level for each audio object may be determined by the audio object emotion level determination engine 220 as referred in the fig. 2.

In an embodiment, the audio object emotion level determination engine 220 may receive the number of audio objects as an input. In an embodiment, the number of audio objects may be "N". Further, the audio object emotion level determination engine 220 may be configured to determine the audio object emotion level for each audio object as an output. In an embodiment, the audio object emotion level determination engine 220 may also be configured to determine an emotion present in source separated audio content. In an embodiment, the source separated audio content may the number of audio objects. In an embodiment, the audio content in an audio object may be referred as *aᵢ*, the emotion and the audio object emotion level for each audio object may be referred as *eᵢ* and *vᵢ*, respectively.

In accordance with an embodiment of the disclosure, the process may include a step 601a. At step 601a, the process may be configured to determine a number of audio features associated with the audio content. In an embodiment, the number of audio features may be one of a basic frequency, a time variation characteristic of the fundamental frequency, a Root Mean Square (RMS) value of an amplitude, a voice speed or the like. Moving forward, the process may include a step 602a. At step 602a, the process may include determining an audio emotion probability for the number of audio objects using an emotion probability determination audio model. In an embodiment, the emotion probability determination audio model may include one or more statistical models pre-configured using learning audio data or video data such as a Hidden Markov model. In an embodiment, the audio emotion probability may be a direct measure of the audio object emotion level, *vᵢ* , representing an extremeness of an audio object emotion. Examples of the audio object emotion may include, but are not limited to, an admiration, an adoration, an appreciation, an amusement, an anger, an anxiety, an awe, an awkwardness, a boredom, a calmness, a confusion, a craving, a disgust, and an empathic pain, a sadness, a normal emotion, and a happy emotion. In an embodiment, the process may include a step 603a. At step 603a, the process may be configured to determine the audio object emotion level.

FIG. 6b illustrates a diagram depicting a determination of the audio object emotion level associated with the number of audio objects, in accordance with an embodiment of the disclosure. Referring to FIG. 6b, in an embodiment, the audio object emotion level determination engine 220 may receive the number of audio objects such as vocals (a1) and a BGM (a2). Further, an output may be generated depicting the emotion and the audio object emotion level associated with the number of audio objects representing extremeness of the emotion, 0 < v < 1, 0 - moderate, 1 - extreme. In an embodiment, the output for the emotion and the audio object emotion level for the vocals may be an excited emotion and 0.9 audio object emotional value. In an embodiment, the output for the emotion and audio object emotion level for the BGM may be a happy emotion and 0.2 audio object emotional value.

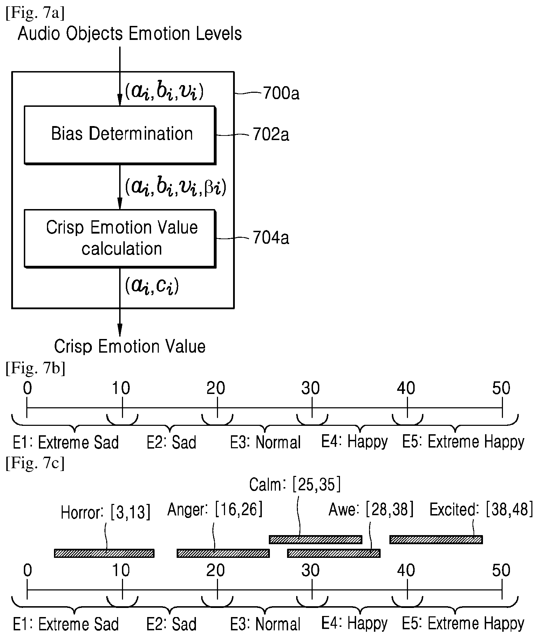

FIG. 7a illustrates an operational flow diagram 700a depicting a process for determining a crisp emotion value associated with each audio object of audio content, in accordance with an embodiment of the disclosure. Referring to FIG. 7a, in an embodiment, the crisp emotion value may be defining an audio object emotion for each audio object among a number of audio objects associated with the audio content as depicted in fig. 1. In an embodiment, the crisp emotion value for each audio object may be determined by the crisp emotion value determination engine 222 as referred in the fig. 2. In an embodiment, the crisp emotion value for each audio object may be determined based on a mapping of an audio object emotion level associated with each audio object on a common scale. In an embodiment, the common scale may be one of a hedonic scale and an arousal scale. In an embodiment, the common scale may include a number of basic emotions. Examples of the number of basic emotions may include, but are not limited to, an extremely sad emotion, a sad emotion, a normal emotion, a happy emotion, and an extremely happy emotion.

Continuing with the above embodiment, the crisp emotion value determination engine 222 may be configured to receive the audio object emotion level *vᵢ* related to each of the number of audio objects as an input and determine the crisp emotion value *cᵢ* for each audio object as an output. In an embodiment, the crisp emotion value determination engine 222 may be configured to re-quantify each pair of each audio object and the audio object emotion level related with each audio object to the common scale including the number of basic emotions such that an absolute position of each audio object may be determined on the common scale. In an embodiment, the hedonic scale may be used with the number of basic emotions such as an extremely sad emotion, a sad emotion, a normal emotion, a happy emotion, and an extremely happy emotion. In an embodiment, an aim of the crisp emotion value determination engine 222 may be finding the position of a given emotion-value pair in a common scale of 0 to 50. The number 0 to 50 may just be a representative of a range of a particular emotion on the common scale.

Continuing with the above embodiment, the process may include a step 702a. At step 702a, the process may include determining by the crisp emotion value determination engine 222 a bias *βᵢ* corresponding to the audio object emotion level of each audio object received as the input. In an embodiment, determining the bias may be based on maintaining a list of the several yet limited emotions which could be the output of an emotion level determination such as horror, anger, awe, excited, calm or the like. In an embodiment, determining the bias may further include mapping each emotion of an audio object onto the range of common scale such that:
Each emotion *eᵢ* must be mapped to a range *Rᵢ*: [*aᵢ, bᵢ*) on the common scale of emotion, where *aᵢ*, *bᵢ* ∈ [0, 50] and *bᵢ - aᵢ* ≥ 10.

The mapping may be a fixed knowledge and may be treated as a predetermined constant.

In response to determining the range, the bias may be calculated as:${β}_{i} = {α}_{i} ,$ where *aᵢ* is minimum of Range *Rᵢ*: [*aᵢ, bᵢ*) for mapping of emotion *eᵢ*

Continuing with the above embodiment, the process may include a step 704a. At step 704a, the process may include determining the crisp emotion value based on an equation 1: ${c}_{i} = {β}_{i} + {v}_{i} \times 10 ,$

Where crisp value is a measure of position of emotion *eᵢ* on the common scale of emotion, incorporating the emotion value *vᵢ* contained in the audio object *aᵢ*.

In an embodiment, the crisp emotion value may be a re-map of the audio object emotion level an individual audio object from the number of audio objects to the common scale. In an embodiment, the crisp emotion value may be useful in quantizing a number of audio emotions as a factor of at least one basic human emotion and quantifying a priority by taking into account emotional preference of a listener. In an embodiment, the at least one basic human emotion may be among the number of basic emotions.

FIG. 7b illustrates a common scale, in accordance with an embodiment of the disclosure. Referring to FIG. 7b, in an embodiment, the common scale may be the common scale with the number of basic emotions, such as the extremely sad emotion, the sad emotion, the normal emotion, the happy emotion, and the extremely happy emotion. In an embodiment, the number of basic emotions may include the range (0 to 50) as depicted in the fig. 7b.

FIG. 7c illustrates a common scale with the audio object emotion mapped on the common scale to a fixed preset range, in accordance with an embodiment of the disclosure. Referring to FIG. 7c, in an embodiment, the audio object emotion, such as horror, anger, awe, exited, calm or the like, mapped on the common scale to a fixed preset range.

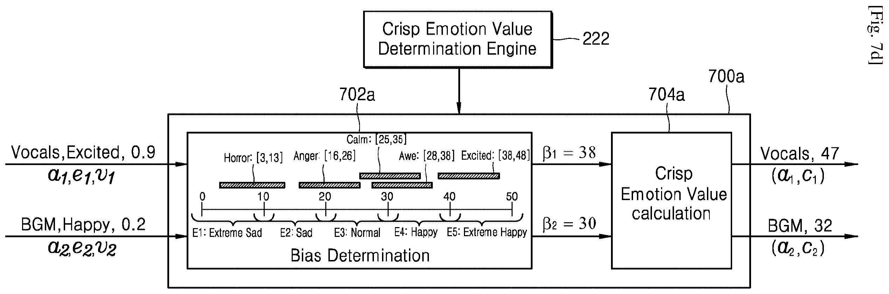

FIG. 7d illustrates a diagram depicting a determination of the crisp emotion value, in accordance with an embodiment of the disclosure. Referring to FIG. 7d, in an embodiment, the crisp emotion value determination engine 222 may receive the number of audio objects such as vocals and BGM, the emotion and the audio object emotion level associated with each audio object. The emotion and emotion value for the vocals may be an excited emotion and 0.9 audio object emotion value and the emotion and the emotion value for the BGM may be a happy emotion and 0.2 audio object emotion value. Further, a bias determined for each audio object may be 38 and 30. Moving forward, the crisp emotion value may be generated for each audio object such that the crisp emotion value for vocals may be 47 and the crisp emotion value for the BGM may be 32.

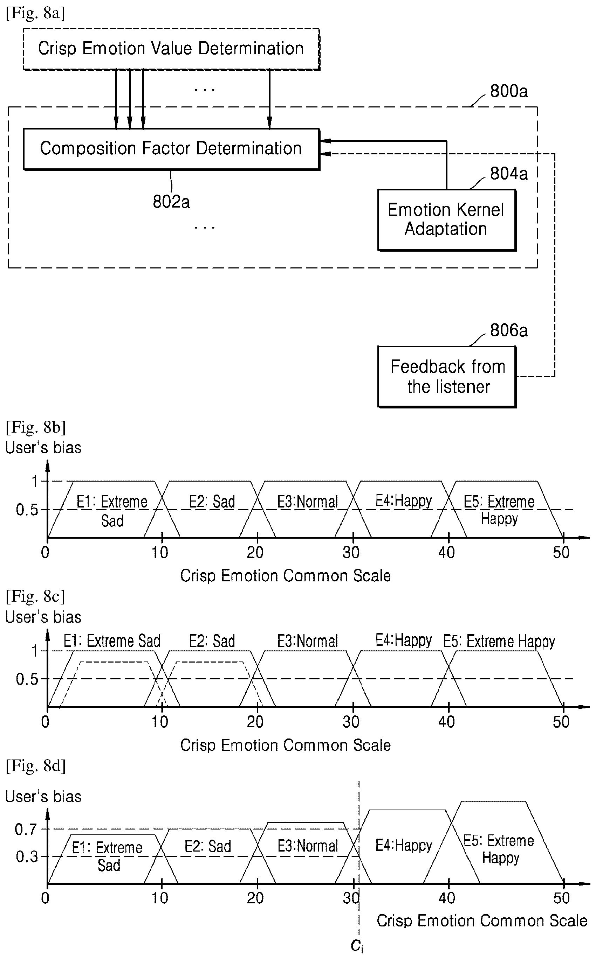

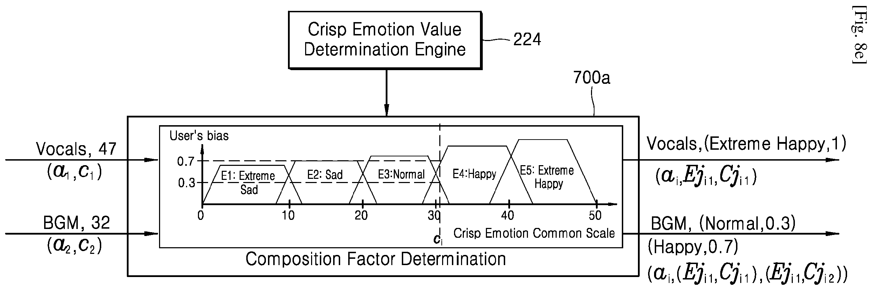

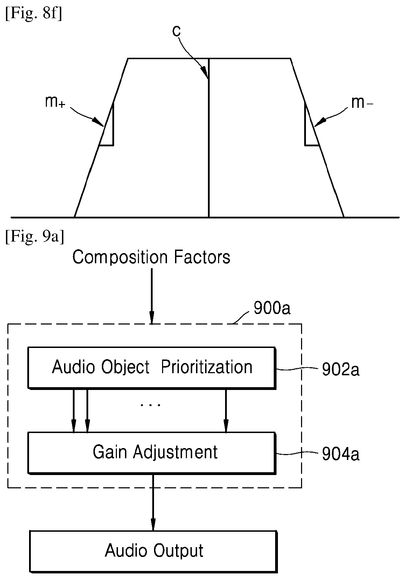

FIG. 8a illustrates an operational flow diagram 800a depicting a process for determining a composition factor, in accordance with an embodiment of the disclosure. FIG. 8b illustrates a kernel scale, in accordance with an embodiment of the disclosure. FIG. 8c illustrates a modified kernel scale based on the feedback from the listener, in accordance with an embodiment of the disclosure. FIG. 8d illustrates an embodiment of the kernel scale depicting a location of the crisp emotion on the kernel scale, in accordance with an embodiment of the disclosure. FIG. 8e illustrates a diagram depicting the composition factor as the output based on the feedback of the listener and the crisp emotion value for each audio object, in accordance with an embodiment of the disclosure. FIG. 8f illustrates a graphical representation depicting a height of the at least one adaptive emotion kernel, in accordance with an embodiment of the disclosure. Referring to FIG. 8a, 8b, 8c, 8d, 8e, 8f, in an embodiment, the composition factor may be representing one or more basic emotions among a number of basic emotions in a crisp emotion value of each audio object as depicted in fig. 1. In an embodiment, the composition factor may be determined in an audio object emotion associated with each audio object from a number of audio objects of audio content. In an embodiment, the composition factor may be determined by the adaptive composition factor determination engine 224 as referred in the fig. 2. In an embodiment, the composition factor may be determined based on a number of adaptive emotion kernels present on a kernel scale and a crisp emotion value for each audio object.

In an embodiment, the process may include a step 802a. At step 802a, the process may include determining the composition factor by the adaptive composition factor determination engine 224. The adaptive composition factor determination engine 224 may be configured to receive the crisp emotion value for each of the number of audio objects as an input (*aᵢ*, *cᵢ*), 1 ≤ *i* ≤ *N.* In response, the adaptive composition factor determination engine 224 may be configured to determine the composition factor (*aᵢ*, (*Ejᵢ, Cjᵢ*)), 1 ≤ *i* ≤ *N, 1* ≤ *j* ≤ M. In an embodiment, 'N' may be the number of audio objects, "M" may be the number of basic emotions. In an embodiment, 'j' may be the one or more basic emotions among the number of basic emotions "M" in the crisp emotion value of each audio object. In an embodiment, the number of basic emotions "M" may be 5. In an embodiment, the number of basic emotions "M" may vary between 4 and 27.

In an embodiment, mathematically, the composition factor *Cjᵢ* may be defined as a percentage composition of a basic emotion *Ejᵢ* among the number of basic emotions present in the crisp emotion value *cᵢ* of each audio object *aᵢ*, where 1 ≤ *i* ≤ *N,* 1 ≤ *j* ≤ M.

For determining the composition factor, the number of adaptive emotion kernels may be required. In an embodiment, each emotion kernel may be a representative shape of a bias of a listener towards each basic emotion represented by each of the number of adaptive emotion kernels. In an embodiment, a size of the number of adaptive emotion kernels represent an illustrative measure of the bias of the listener towards one of the number of the basic emotions such as E1: extremely sad, E2: sad, E3: neutral, E4: happy and E5: extremely happy. In an embodiment, E1, E2, E3, E4, and E5 may be the number of adaptive emotion kernels.

In an embodiment, the process may include a step 804a. At step 804a, the process may include adjusting the size of the number of adaptive emotion kernels. In an embodiment, adjusting the size of the number of adaptive emotion kernels may include increasing or decreasing one or more parameters associated with a shape of the number of adaptive emotion kernels. In an embodiment, the one or more parameters may include a slope, a height, a length, a width, a radius, and an angle of the number of adaptive emotion kernels.

In an embodiment, where it is determined that the number of adaptive emotion kernels is in the shape of a trapezium, adjusting the size may include increasing or decreasing one or more of the slope and the height of the number of adaptive emotion kernels. In an embodiment, where it is determined that the number of adaptive emotion kernels is in a rectangular shape, adjusting the size may include increasing or decreasing one or more of the length and the widthof the number of adaptive emotion kernels. In an embodiment, where it is determined that the number of adaptive emotion kernels is in a circular shape, adjusting the size may include increasing or decreasing the radius of the number of adaptive emotion kernels. In an embodiment, where it is determined that the number of adaptive emotion kernels is in a triangular shape, adjusting the size may include increasing or decreasing one of the angle and the height of the number of adaptive emotion kernels.

In an embodiment, the process may include a step 806a. At step 806a, the process may include changing the size of each adaptive emotion kernel according to feedback from the listener. In an embodiment, a shape of each of the number of adaptive emotion kernels may be adapted by changing the size of each adaptive emotion kernel according to an interest of the listener. Feedback from the listener as a positive feedback or negative feedback maybe taken using one or more of following known means:
Visual Feedback: Given visual data of the listener watching the content is available, the feedback maybe perceived from the expression on a face of the listener.

Sensor Feedback: Based on the level of data available with a processor, such as the data of smart watch of the listener, the data may be used to conclude a reaction of the current automated listener as the positive or negative feedback.

Prior Feedback: Knowledge such as past volume control behavior corresponding the past audio emotions, may be recorded and used as a prior knowledge to automatically understand the expected behavior of the listener at a current time.

Manual Feedback: Apart from the above-mentioned automated ways of taking feedback, another way could be to manually ask the listener about the feedback about liking a particular emotion. In an embodiment, the particular emotion may be among the number of audio object emotion.

Moving forward, once the feedback from the listener in terms of positive or negative is received for a particular basic emotion among the number of basic emotions, shape of one or more of the number of adaptive emotion kernels may need to be adapted according to the interest of the listener.

The steps of adaptation may include:
starting with a basic shape of the number of adaptive emotion kernel for each listener. In an embodiment, the basic shape may be a default shape for each of the number of adaptive emotion kernels.

Based on the positive or the negative feedback from the listener recorded by any of the mentioned ways, the one or more adaptive emotion kernels may be adapted as follows: ${m}_{+} = {m}_{+} + Δ ,$ ${m}_{-} = {m}_{-} - Δ ,$ $c = c + Δ$ where $Δ = \left\{\begin{matrix}ε > 0 , for a Yes based feedback of user \\ ε < 0 , for a No based feedback of user\end{matrix}\right.$ *m*₊ is the positive slope of the kernel, *m*₋ is the negative slope of the kernel, c is the height of the kernel, and ε is a small constant as depicted in the FIG. 8f.

In an embodiment, the one or more adaptive emotion kernels may be shaped in the form of a trapezium.

In an embodiment, if the listener does not like hearing extreme sad/ sad emotion, based on the feedback of the listener, the one or more adaptive emotion kernels may be adapted.

Moving forward, in response to adaption of the one or more adaptive emotion kernels based on the feedback, the composition factor may be determined based on the crisp emotion values *c*i for the number of audio objects ai by locating the crisp emotion value on the kernel scale for each audio object among the number of audio objects. Based on the location of the crisp emotion value of each audio object on the kernel scale, a percentage contribution of the number of basic emotions may be determined.

Referring to FIG. 8b, in an embodiment, the kernel scale may include the number adaptive emotion kernels representing the number of basic emotions. In an embodiment, a base shape also referred as the default shape of the adaptive emotion kernel scale may be as shown, for the bias of a constant listener for each of the number of basic emotions.

Referring to FIG. 8c, in an embodiment, if the listener does not like hearing the extreme sad or the sad emotion, based on the feedback the number of adaptive emotions kernels may be updated as depicted in the fig. 8c.

Referring to FIG. 8d, based on the location of the crisp emotion value *cᵢ*, the percentage contribution of the one or more basic emotions may be found. In an embodiment, the percentage contribution of the number of basic emotions *Ej* : 1 ≤ *j* ≤M; for the crisp emotion value *cᵢ* for an audio object *aᵢ* are as follows in the table 2:

**Table 2 depicts contribution of the number of basic emotions in the composition factor**

| *Ej* | Emotion | *Cj* : Contribution Factor |
|---|---|---|
| E1 | Extreme sad | 0 |
| E2 | Sad | 0 |
| E3 | Normal | 0.3 (30%) |
| E4 | Happy | 0.7 (70%) |
| E5 | Extreme Happy | 0 |

In an embodiment, the number of adaptive emotion kernels play an important part in determining the composition factor by symbolizing that "emotions are subjective in nature" such that "What may be sad for one, may not be that sad for other." The consideration of the audio object emotion being subjective may be taken care easily by maintaining the basic number of adaptive emotion kernels and adapting based on the feedback from the listener.

Referring to FIG. 8e, in an embodiment, the input may be vocals = 47, and Background Music (BGM) = 32 and the output may imply that the vocals contain 100% of the E5 (Extremely Happy) and the BGM contains 30% of the E3 (Normal) and 70% of the E4 (Happy) by the composition factor determination engine 224.

Referring to FIG. 8f, in an embodiment, a shape of adaptive emotion kernel may be adapted by changing the size of adaptive emotion kernel according to an interest of the listener. *"m*₊*"* is a positive slope of the kernel, *"m₋"* is a negative slope of the kernel, and "c" is the height of the kernel.

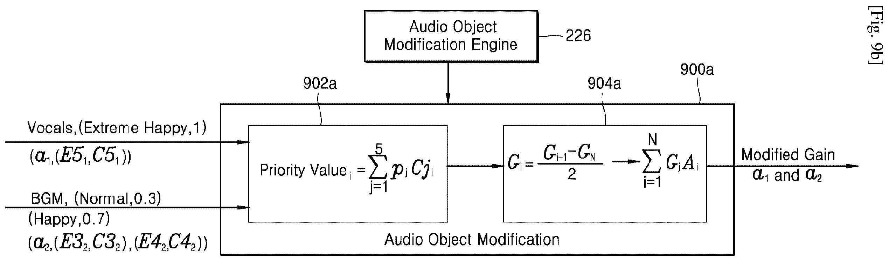

FIG. 9a illustrates an operational flow diagram 900a depicting a process for an audio object prioritization and gain adjustment, in accordance with an embodiment of the disclosure. FIG. 9b illustrates a diagram depicting the audio object prioritization and the gain adjustment for generating the modified audio content, in accordance with an embodiment of the disclosure. Referring to FIG. 9a and FIG. 9b, in an embodiment, the audio object prioritization may include calculating a probability of a listener associating with each of one or more basic emotions represented in the composition factor among a number of basic emotions and a priority value associated with each audio object among a number of audio objects based on the probability as depicted in fig. 1. Further, the gain adjustment may include adjusting a gain associated with at least one audio object among the number of audio objects for modifying audio content. In an embodiment, upon gain adjustment of the at least one audio object, the number of modified audio objects may be combined to generate a modified audio content for the listener. In an embodiment, the audio object prioritization and gain adjustment may be performed by the audio object modification engine 226 as referred in the fig. 2.

Continuing with the above embodiment, the audio object modification engine 226 may be configured to receive a composition factor (representing the number of basic emotions in each audio object (*aᵢ*, (*Ejᵢ, Cjᵢ*)), 1 ≤ *i* ≤ *N, 1* ≤ *j* ≤ M)as an input from the composition factor determination engine 224 as referred in the fig. 2. In an embodiment, 'N' may be the number of audio objects, "M" may be the number of basic emotions. In an embodiment, 'j' may be the one or more basic emotions among the number of basic emotions "M" represented in the composition factor. In an embodiment, the number of basic emotions "M" may be 5. In an embodiment, the number of basic emotions "M" may vary between 4 and 27. Further, in response to receiving the input, the audio object modification engine 226 may be configured to generate a prioritized list of the number of audio objects. *Aᵢ*, 1 ≤ *i* ≤ *N.*

In an embodiment, the process may include a step 902a. At step 902a, the process may include determining a priority of a particular audio object from the number of audio objects based on preference information of a listener by the audio object modification engine 226.

In an embodiment, the priority value of each audio object *aᵢ* may be determined as follows:
Determining the probability of the listener associating with each of the one or more basic motions from the number of basic emotions: The probability of the listener associating with each of the one or more basic motions may be determined solely based on feedback from the listener. Alternatively, the information contained in a number of adaptive emotion kernels may be used to determine the probability based on equation 2: ${p}_{j} = \frac{area contained in the Emotion kernel of Ej}{maximum area contained of all Emotion kernel} , 1 \leq j \leq M$ where, *Ej* : is one of the basic emotions of E1, E2, E3, E4, E5 as explained earlier.

Determining the Priority Value: Once the probability of the listener associating with each basic emotion among the one or more basic emotions, *pⱼ*, is known, the priority value of each audio object *aᵢ* may be determined based on equation 3:$Priority {Value}_{i} = {\sum }_{j = 1}^{M} {p}_{j} {Cj}_{i}$ where, *Cjᵢ* is the composition factor of basic emotion *Ej* for audio object *aᵢ*

Once the priority value of each audio object is determined, the audio object modification engine 226 may be configured to sort the number of audio objects in an order of priority as: ${A}_{i} = {a}_{k} ,$ such that *aₖ* has the maximum priority value among the audio objects $\left\{{a}_{k}-\left\{{A}_{1}, .. {A}_{i - 1}\right\}\right\} , 1 \leq i , k \leq N$

Further, for performing the gain adjustment, audio object modification engine 226 may be configured to receive the prioritized audio object list *Aᵢ*, 1 ≤ *i* ≤ *N* as the input and generate the modified audio content as the output.

In an embodiment, the audio object modification engine 226 may be configured to provide appropriate gains to the prioritized audio objects, so as to remove/reduce or enhance the particular audio object, based on the priority value, and also to mix the adjusted gain audio objects to generate a final modified audio output. In an embodiment, the final modified audio output may be the modified audio content.

In an embodiment, the process may include a step 904a. At step 904a, the process may include adjusting to the gains according to a preset preference set by the listener, given the prioritized audio object list *Aᵢ*, such that the priority of *Aᵢ* is greater than priority of *A*_{*i+*1} ; 1 ≤ *i* ≤ *N* by the listener by the audio object modification engine 226. In an embodiment the preset preference may include an option to ask whether to completely remove some part of audio or to enhance or reduce the effect. In an embodiment, the gain adjustment must be handled appropriately for the following scenarios:
Completely removing a part of the audio content by assigning a gain of 0 to a least priority audio object (*G_{N}* = 0) and a gain of 1 to the highest priority audio object (*G*₁ = 1). In an embodiment, the least priority audio object may be an audio object in the prioritized audio object list with a lowest priority value and the highest priority audio object may be an audio object in the prioritized audio object list with a highest priority value.

Enhancing or reducing an effect by assign a non-zero gain to the least priority audio object (*G_{N} >* 0) and a gain of 1 to the highest priority audio object (*G*₁ > 1).

Continuing with the above embodiment, once *G_{N}* and *G*₁ are set for the number of audio objects *A_{N}* and *A*₁ respectively, the gains for remaining audio objects *Aᵢ* may be determined based on equation 4: ${G}_{i} = \frac{{G}_{i - 1} - {G}_{N}}{2}$

Furthermore, on determining the gains, the modified output may be simply mixed based on equation 5: $Modified Audio Output = {\sum }_{i = 1}^{N} {G}_{i} {A}_{i}$

Referring to FIG. 9b, in an embodiment, the audio object modification engine 226 may receive the number of audio objects such as vocals, and a BGM and generate a list of the audio objects based on the priority value. Further, based on the priority value, the modified audio content may be generated. In an embodiment, the vocals may represent an extreme happy emotion and a composition factor may be 0.9 and the BGM may represent a happy emotion, and a normal emotion with a composition factor of 0.3 and 0.7.

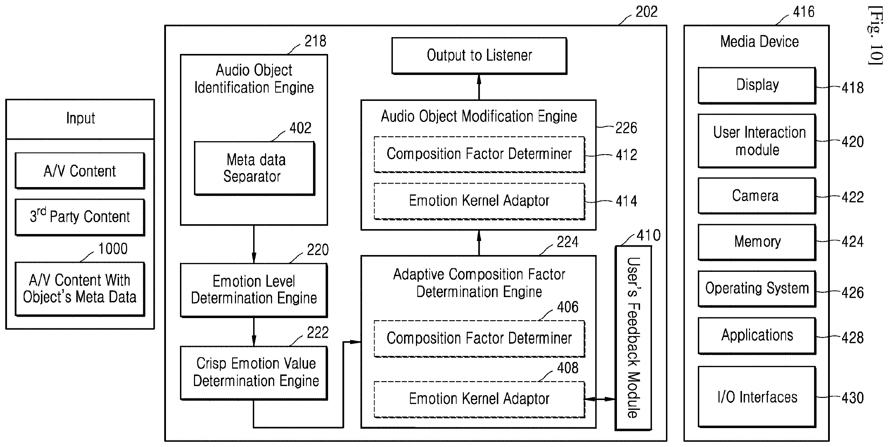

Fig. 10 illustrates an architectural diagram of a method to modify audio content comprising a meta-processor 1002, in accordance with an embodiment of the disclosure. In an embodiment, the architectural diagram 1000 may be an embodiment of the architectural diagram as depicted in the fig. 4. Furthermore, the number of basic emotions on a common scale utilized by the crisp emotion value determination engine 220 may vary between 4 and 27. In another embodiment, the adaptive composition factor determination engine 224 may be configured to use feedback of a listener such that the feedback may be generated based on reinforcement learning.

Further, in an embodiment, the audio object identification engine 218 may use audio objects based codecs to utilize meta data 1000 related to audio object information such as Dolby Atmos rather than performing source separation of the audio content. In an embodiment, a meta data processor maybe deployed to process and find information of each audio object information directly from the input meta-data.

In an embodiment, a number of adaptive emotions kernels may be of a number of shapes. In an embodiment, the number of shapes may include a trapezium shape, a triangular shape, a circular shape, a rectangular shape or the like. The number of shapes may be changed/initialized according to the best suited using a trial and error method. The shape may further be adjusted using a reinforcement learning based feedback of a listener.

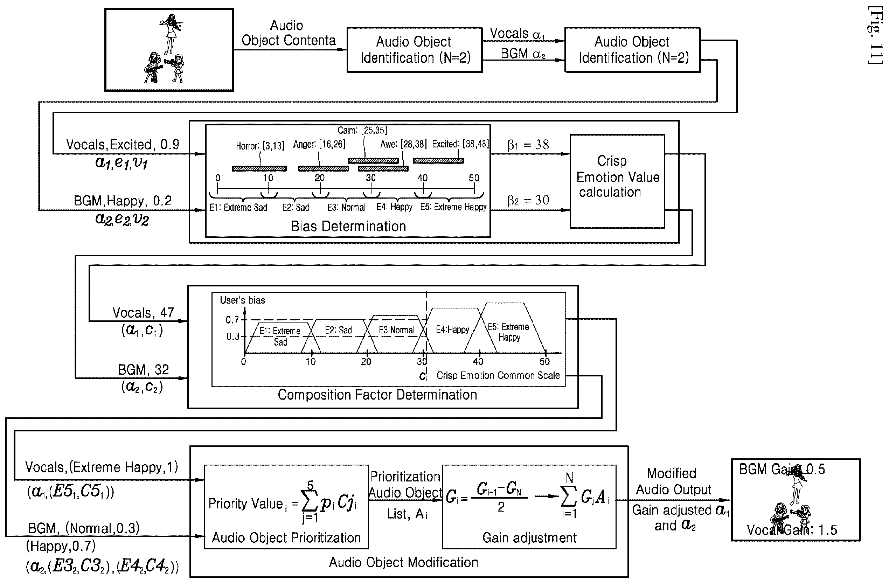

FIG. 11 illustrates a use case diagram depicting a scenario for modifying audio content by enhancing a voice of a singer, in accordance with an embodiment of the disclosure. Referring to FIG. 5d, FIG.6b, FIG.7d, FIG.8e, FIG.9b and FIG.11, FIG.11 illustrates the scenario for modifying audio content to enhance a signer's voice in accordance with the disclosure.

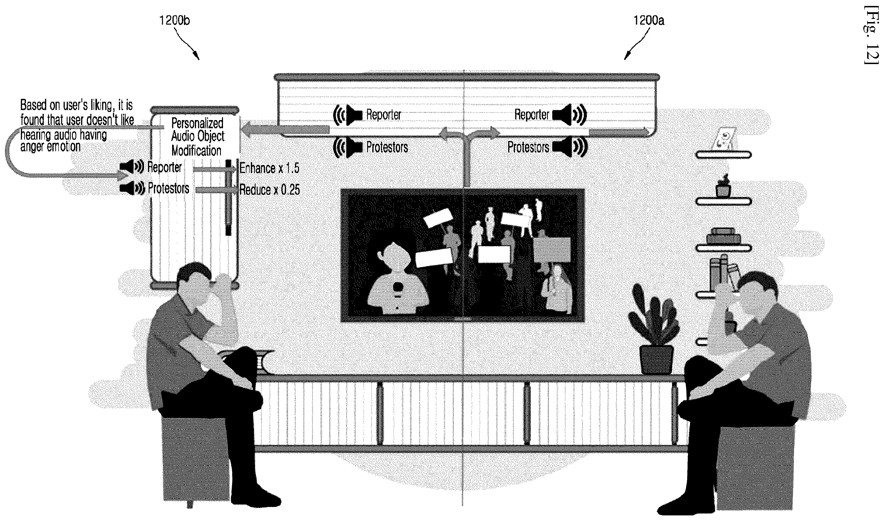

FIG. 12 illustrates a use case diagram 1200a depicting a scenario of a listener being unable to modify audio content, in accordance with an existing prior-art. The listener may not like loud audio or audio associated with anger/rage and may have to manually reduce volume of a Tele Vision (TV) playing the audio. However, on reducing the volume, the listener may not be able to hear a reporter clearly or if the listener increases the volume, a background noise of people in the TV may get louder. FIG. 12 illustrates a use case diagram 1200b depicting a scenario of the listener modifying the audio content, in accordance with an embodiment of the disclosure. In an embodiment, the listener may be relieved of reducing the volume of a particular audio object such as shouting by one or more persons, as a smart TV may understand a preference of the listener.

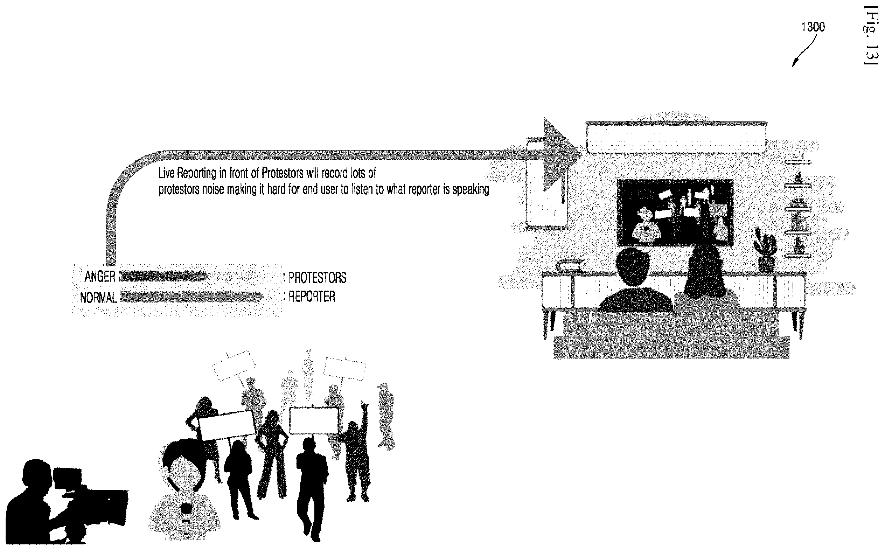

FIG. 13 illustrates a use case diagram 1300 depicting a scenario of a listener modifying audio content by managing one or more audio objects, in accordance with an embodiment of the disclosure. In an embodiment, the one or more audio objects may be related to audio object emotions such as anger and shouting. In an embodiment, the listener may not be liking audio containing anger and shouting and may be able to reduce an effect of the anger and shouting in the audio content. In an embodiment, the audio content may be of a live recording of one or more protestors making difficult for the listener to listen a report of the reporter with respect to the one or more protestors.

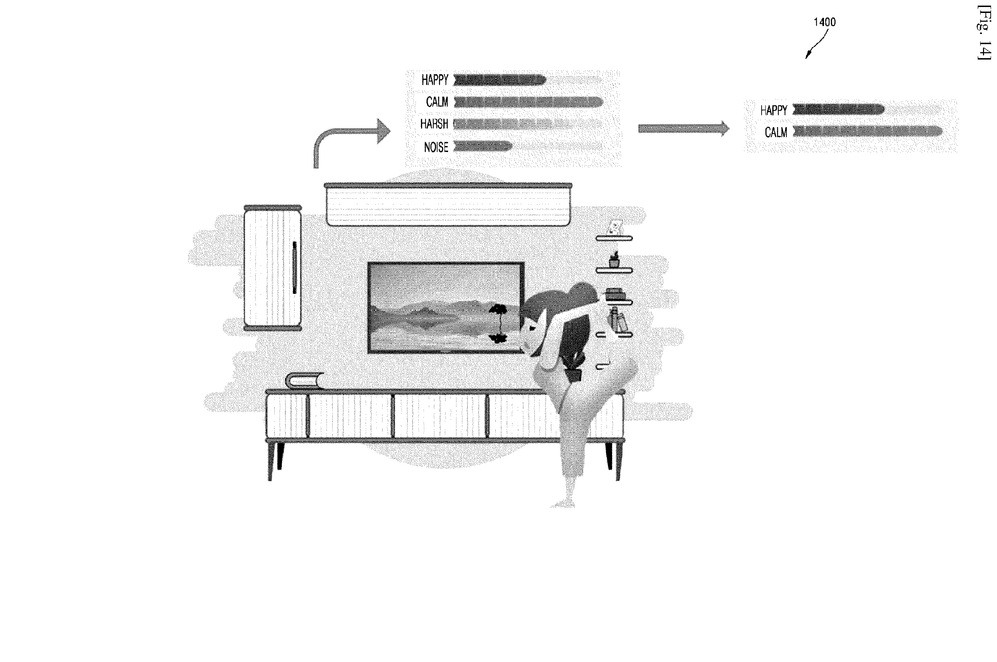

FIG. 14 illustrates a use case diagram 1400 depicting a scenario of a listener controlling one or more audio objects of audio content, in accordance with an embodiment of the disclosure. In an embodiment, the one or more audio objects may represent audio object emotions such as happy, calm, harsh, and noise. In an embodiment, the listener may be exercising and may increase an effect of an audio object among the one or more audio objects related to the calm audio object emotion by removing the audio objects representing the harsh emotion and the noise emotion.

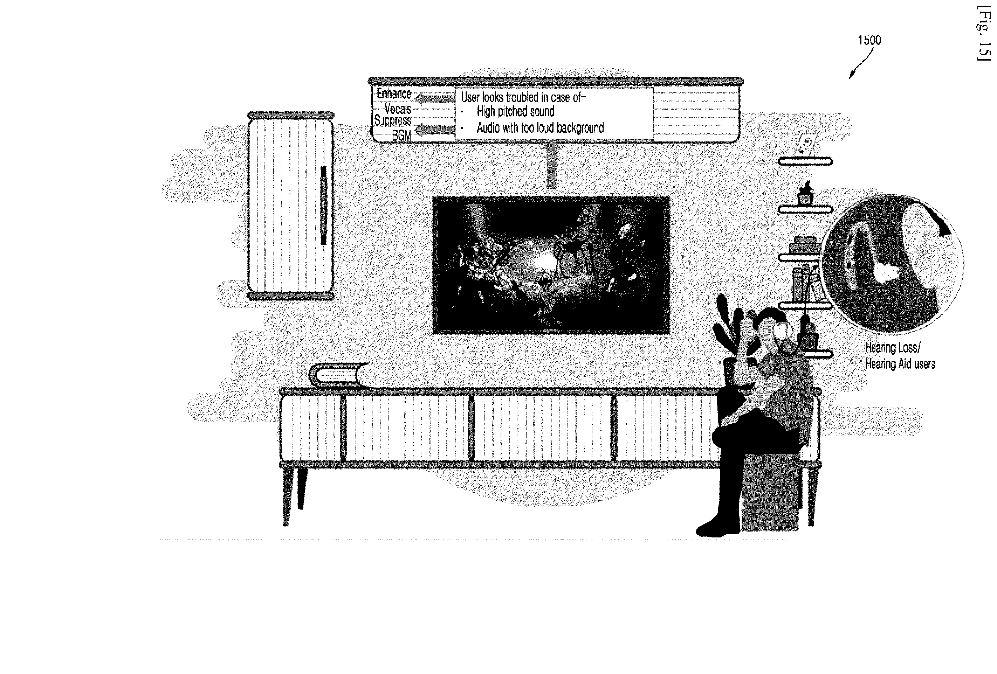

FIG. 15 illustrates a use case diagram 1500 depicting a scenario of a listener enhancing vocals and suppressing a BGM from audio content, in accordance with an embodiment of the disclosure. In an embodiment, the listener may be suffering from a hearing condition and utilizing a hearing aid causing the listener to feel an audio signal being loud but unclear. In an embodiment, a system disclosed in the disclosure may be configured to understand a trouble or disinterest of the listener towards loud sounds making it unclear for the listener to understand, thus automatically suppressing the unwanted audio object.

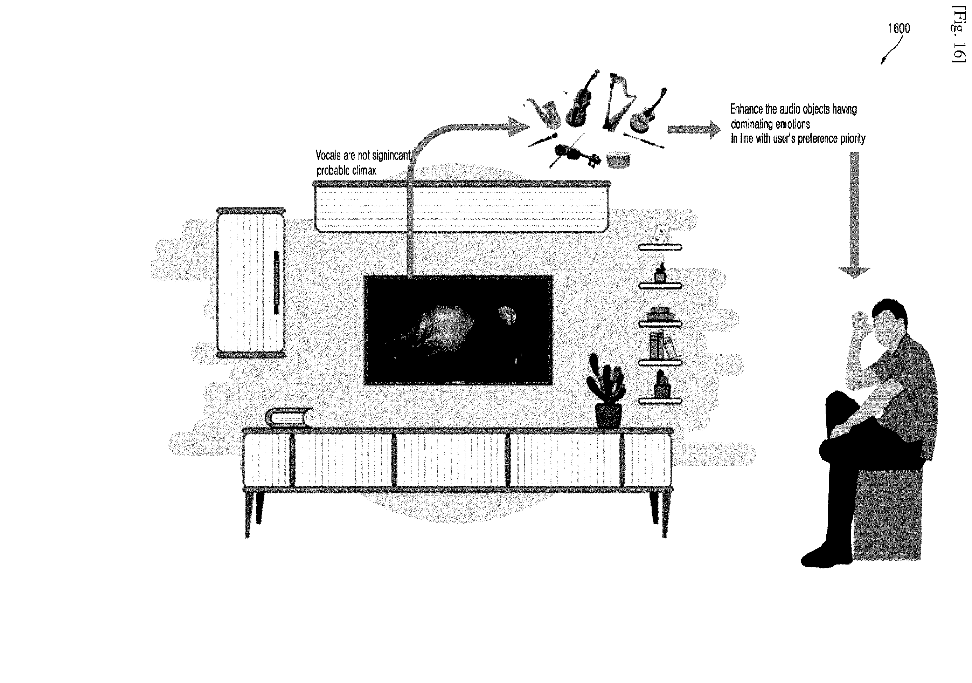

FIG. 16 illustrates a use case diagram 1600 depicting a scenario of an enhancement of a musical part in audio content, in accordance with an embodiment of the disclosure. In an embodiment, the musical part may be preferred by the listener and a system disclosed in the disclosure may be configured to detect the preference based on previous experiences and enhancing the musical part as preferred by the listener.

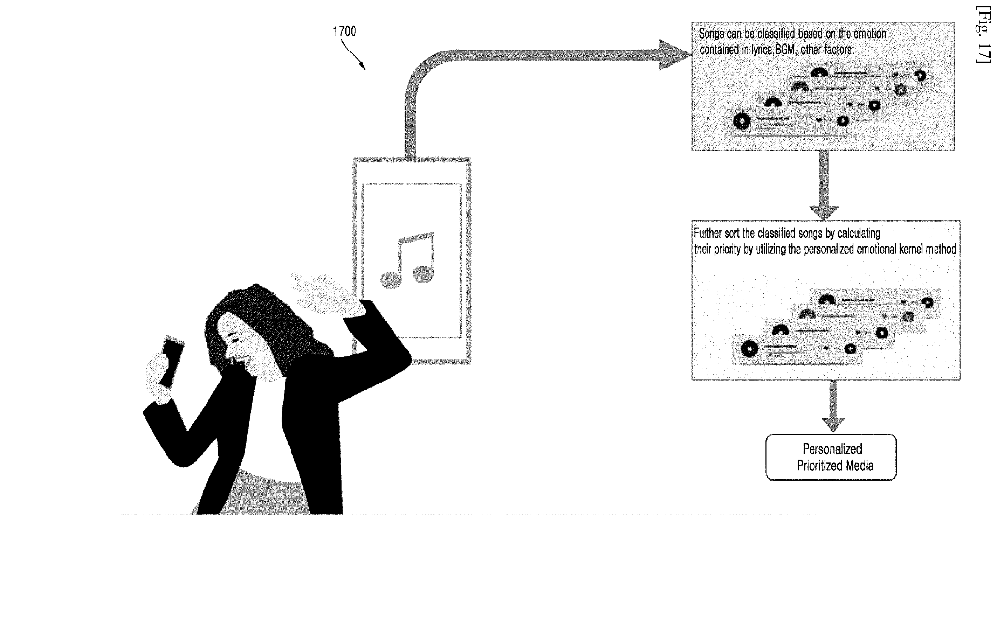

FIG. 17 illustrates a use case diagram 1700 depicting a scenario where audio content may be personalized based on an emotion associated with the audio content, in accordance with an embodiment of the disclosure. In an embodiment, the audio content may be a song. In an embodiment, the song may be classified based on the emotion contained in lyrics, BGM, other factors associated with the song. Furthermore, a system disclosed in the disclosure may be configured to classify the song by calculating a priority by utilizing a personalized emotional kernel method.

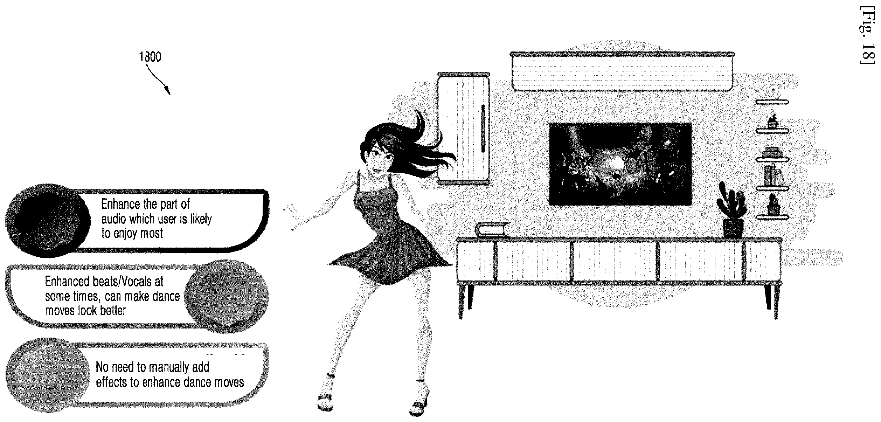

FIG. 18 illustrates a use case diagram 1800 depicting a scenario of automatic enhancement of vocals/beats in audio content, in accordance with an embodiment of the disclosure. In an embodiment, the enhancement may be performed based on a preference of a listener by a system disclosed in the disclosure while the listener is dancing. In an embodiment, the system may be configured to enhance a part of the audio content the listener is likely to enjoy along with the vocals/beats in some part of the audio content without having to manually enhance dance moves of the listener dancing while listening to the audio content.

While specific language has been used to describe the disclosure, any limitations arising on account of the same are not intended. As would be apparent to a person in the art, various working modifications may be made to the method in order to implement the inventive concept as taught herein. The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Moreover, the actions of any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

Benefits, other advantages, and solutions to problems have been described above with regard to specific embodiments.

## Claims

1. A method for modifying audio content, the method comprising:
determining (102) a crisp emotion value defining an audio object emotion, for each audio object among a plurality of audio objects associated with an audio content, wherein determining the crisp emotion value for each audio object comprises:
mapping an audio object emotion for each audio object onto a common scale to determine a range of the audio object emotion in each audio object, wherein the common scale comprises a plurality of basic emotions;
determining a bias for the audio object emotion for each audio object, wherein the bias is a least value of the range on the common scale; and
adding an audio object emotion level associated with each audio object mapped on the common scale to the bias to determine the crisp emotion value for each audio object;
determining (104) a composition factor representing one or more basic emotions in the crisp emotion value of each audio object among the plurality of basic emotions;
calculating (106) a probability of a listener associating with each of the one or more basic emotions represented in the composition factor;
calculating (108) a priority value associated with each audio object based on the probability of the listener associating with each of the one or more basic emotions represented in the composition factor of each audio object and the composition factor of each audio object;
generating (110) a list comprising the plurality of audio objects arranged in a specified order using the priority value of each audio object among the plurality of audio objects; and
modifying (112) the audio content by adjusting a gain of at least one audio object among the plurality of audio objects in the list, based on the priority value.

2. The method as claimed in claim 1, further comprising:
generating a modified audio content by combining a plurality of modified audio objects.

3. The method as claimed in claim 1, wherein the common scale is one of a hedonic scale and an arousal scale.

4. The method as claimed in claim 1, wherein the determining the composition factor comprises:
mapping the crisp emotion value of each audio object on a kernel scale comprising a plurality of adaptive emotion kernels representing the plurality of basic emotions,
wherein the composition factor is based on a contribution of the one or more basic emotions among the plurality of basic emotions represented by one or more adaptive emotion kernels in the crisp emotion value of each audio object.

5. The method as claimed in claim 4, further comprises:
obtaining a plurality of feedback parameters associated with the listener from at least one of a memory and the listener in real-time; and
adjusting a size of at least one adaptive emotion kernel among the plurality of adaptive emotion kernels based on the plurality of feedback parameters.

6. The method as claimed in claim 4, wherein the contribution of the one or more basic emotions is determined based on the mapping the crisp emotion value of each audio object on the one or more adaptive emotion kernels.

7. The method as claimed in claim 1, wherein the calculating the probability of the listener associating with each of the one or more basic emotions represented in the composition factor is based on at least one of:
a plurality of feedback parameters associated with the listener stored in a memory; and
a ratio of an area of one or more adaptive emotion kernels corresponding to each emotion represented in the composition factor and a total area of a plurality of adaptive emotion kernels of the plurality of basic emotions.

8. The method as claimed in claim 5 or 7, wherein the plurality of feedback parameters comprises at least one of a visual feedback, a sensor feedback, a prior feedback, and a manual feedback associated with the listener.

9. The method as claimed in claim 1, wherein the calculating the priority value for each audio object comprises:
performing a weighted summation of the probability of the listener associating with each of the one or more basic emotions represented in the composition factor and the composition factor representing the one or more basic emotions;
and/or wherein the modifying the audio content by adjusting the gain of at least one audio object comprises:
performing one or more of:
assigning the gain of one to an audio object in the list corresponding to a highest priority value and the gain of zero to another audio object in the list corresponding to a lowest priority value, wherein assigning the gain of zero indicates that the other audio object is removed from the audio content; and
assigning the gain of a non-zero value to the audio object corresponding to a lowest priority value and the gain of one to an audio object corresponding to a highest priority value, wherein assigning the gain of the non-zero value indicates that an effect the audio object is changed;
calculating the gain associated with one or more audio objects in the list other than the audio object with the highest priority value and the other audio object with the lowest priority value based on the gain associated with the audio object with a priority value higher than the one or more audio objects and the gain associated with the audio object with a priority value lower than the one or more audio objects; and
performing a weighted summation of the gain associated with each audio object in the list for modifying the audio content.

10. The method as claimed in claim 1, further comprising:
receiving the audio content as an input;
separating the audio content into the plurality of audio objects; and
determining an audio object emotion level for each audio object among the plurality of audio objects.

11. The method as claimed in claim 10, wherein the separating the audio content into the plurality of audio objects comprises:
generating a pre-processed audio content by pre-processing the input;
generating an output by feeding the pre-processed audio content to a source-separation model; and
generating the plurality of audio objects associated with the audio content from the audio content by post-processing the output.

12. The method as claimed in claim 10, wherein the audio object emotion level of each audio object is determined by:
determining one or more audio features associated with each audio object,
wherein the one or more audio features comprise at least one of a basic frequency, a time variation characteristic of a frequency, a Root Mean Square (RMS) value associated with an amplitude, and a voice speed associated with each audio object;
determining an emotion probability value of each audio object based on the one or more audio features; and
determining the audio object emotion level of each audio object based on the emotion probability value.

13. A system (202) for modifying an audio content for a listener, the system (202) comprising:
a crisp emotion value determination engine (222) configured to determine (102) a crisp emotion value defining an audio object emotion, for each audio object among a plurality of audio objects associated with the audio content wherein determining the crisp emotion value for each audio object comprises:
mapping an audio object emotion for each audio object onto a common scale to determine a range of the audio object emotion in each audio object, wherein the common scale comprises a plurality of basic emotions;
determining a bias for the audio object emotion for each audio object, wherein the bias is a least value of the range on the common scale; and
adding an audio object emotion level associated with each audio object mapped on the common scale to the bias to determine the crisp emotion value for each audio object;
an adaptive composition factor determination engine (224) configured to determine (104) a composition factor representing one or more basic emotions in the crisp emotion value of each audio object among the plurality of basic emotions; and
an audio object modification engine (226) configured to:
calculate (106) a probability of a listener associating with each of the one or more basic emotions represented in the composition factor;
calculate (108) a priority value associated with each audio object based on the probability of the listener associating with each of the one or more basic emotions represented in the composition factor of each audio object and the composition factor of each audio object;
generate (110) a list comprising the plurality of audio objects in a specified order using the priority value of each audio object among the plurality of audio objects; and
modify (112) the audio content by adjusting a gain of at least one audio object among the plurality of audio objects in the list, based on the priority value.

14. A non-transitory computer-readable storage medium comprising instructions which, when executed by a computer, cause the computer to carry out the steps of the method of claims 1 to 12.

## Patentansprüche

1. Verfahren zur Modifizierung von Audioinhalt, wobei das Verfahren Folgendes umfasst:
Bestimmen (102) eines scharfen Emotionswerts, der eine Audioobjekt-Emotion definiert, für jedes Audioobjekt aus einer Vielzahl von Audioobjekten, die mit einem Audioinhalt assoziiert sind, wobei das Bestimmen des scharfen Emotionswerts für jedes Audioobjekt Folgendes umfasst:
Abbilden einer Audioobjekt-Emotion für jedes Audioobjekt auf eine gemeinsame Skala, um einen Bereich der Audioobjekt-Emotion in jedem Audioobjekt zu bestimmen, wobei die gemeinsame Skala eine Vielzahl von Grundemotionen umfasst;
Bestimmen eines Bias für die Audioobjekt-Emotion für jedes Audioobjekt, wobei der Bias ein Minimalwert des Bereichs auf der gemeinsamen Skala ist; und
Addieren einer mit jedem Audioobjekt assoziierten und auf die gemeinsame Skala abgebildeten Audioobjekt-Emotionsstufe zu dem Bias, um den scharfen Emotionswert für jedes Audioobjekt zu bestimmen;
Bestimmen (104) eines Kompositionsfaktors, der eine oder mehrere Grundemotionen im scharfen Emotionswert jedes Audioobjekts aus der Vielzahl von Grundemotionen repräsentiert;
Berechnen (106) einer Wahrscheinlichkeit, dass ein Zuhörer mit jeder der einen oder mehreren im Kompositionsfaktor repräsentierten Grundemotionen assoziiert ist;
Berechnen (108) eines mit jedem Audioobjekt assoziierten Prioritätswerts basierend auf der Wahrscheinlichkeit, dass der Zuhörer mit jeder der einen oder mehreren im Kompositionsfaktor jedes Audioobjekts repräsentierten Grundemotionen assoziiert ist, und auf dem Kompositionsfaktor jedes Audioobjekts;
Erzeugen (110) einer Liste, die die Vielzahl von Audioobjekten umfasst, die in einer spezifizierten Reihenfolge unter Verwendung des Prioritätswerts jedes Audioobjekts aus der Vielzahl von Audioobjekten angeordnet sind; und
Modifizieren (112) des Audioinhalts durch Einstellen einer Verstärkung mindestens eines Audioobjekts aus der Vielzahl von Audioobjekten in der Liste basierend auf dem Prioritätswert.

2. Verfahren nach Anspruch 1, ferner umfassend:
Erzeugen eines modifizierten Audioinhalts durch Kombinieren einer Vielzahl von modifizierten Audioobjekten.

3. Verfahren nach Anspruch 1, wobei die gemeinsame Skala eine von einer hedonischen Skala und einer Erregungsskala ist.

4. Verfahren nach Anspruch 1, wobei das Bestimmen des Kompositionsfaktors Folgendes umfasst:
Abbilden des scharfen Emotionswerts jedes Audioobjekts auf eine Kernel-Skala, die eine Vielzahl von adaptiven Emotionskernel umfasst, die die Vielzahl von Grundemotionen repräsentieren,
wobei der Kompositionsfaktor auf einem Beitrag der einen oder mehreren Grundemotionen aus der Vielzahl von durch einen oder mehrere adaptive Emotionskernel repräsentierten Grundemotionen im scharfen Emotionswert jedes Audioobjekts basiert.

5. Verfahren nach Anspruch 4, ferner umfassend:
Erfassen einer Vielzahl von mit dem Zuhörer assoziierten Rückkopplungsparametern in Echtzeit aus mindestens einem von einem Speicher oder dem Zuhörer; und
Einstellen einer Größe mindestens eines adaptiven Emotionskernels aus der Vielzahl von adaptiven Emotionskernel basierend auf der Vielzahl von Rückkopplungsparametern.

6. Verfahren nach Anspruch 4, wobei der Beitrag der einen oder mehreren Grundemotionen basierend auf der Abbildung des scharfen Emotionswerts jedes Audioobjekts auf den einen oder die mehreren adaptiven Emotionskernel bestimmt wird.

7. Verfahren nach Anspruch 1, wobei das Berechnen der Wahrscheinlichkeit, dass der Zuhörer mit jeder der einen oder mehreren im Kompositionsfaktor repräsentierten Grundemotionen assoziiert ist, auf mindestens einem der folgenden Elemente basiert:
einer Vielzahl von mit dem Zuhörer assoziierten Rückkopplungsparametern, die in einem Speicher gespeichert sind; und
einem Verhältnis zwischen einer Fläche von einem oder mehreren adaptiven Emotionskernel, die jeder im Kompositionsfaktor repräsentierten Emotion entsprechen, und einer Gesamtfläche einer Vielzahl von adaptiven Emotionskernel der Vielzahl von Grundemotionen.

8. Verfahren nach Anspruch 5 oder 7, wobei die Vielzahl von Rückkopplungsparametern mindestens einen der folgenden Parameter umfasst: eine visuelle Rückkopplung, eine Sensor-Rückkopplung, eine vorherige Rückkopplung und eine manuelle Rückkopplung, die mit dem Zuhörer assoziiert sind.

9. Verfahren nach Anspruch 1, wobei das Berechnen des Prioritätswerts für jedes Audioobjekt Folgendes umfasst:
Durchführen einer gewichteten Summierung der Wahrscheinlichkeit, dass der Zuhörer mit jeder der einen oder mehreren im Kompositionsfaktor repräsentierten Grundemotionen assoziiert ist, mit dem Kompositionsfaktor, der die eine oder mehreren Grundemotionen repräsentiert;
und/oder wobei das Modifizieren des Audioinhalts durch Einstellen der Verstärkung mindestens eines Audioobjekts Folgendes umfasst:
Durchführen einer oder mehrerer der folgenden Maßnahmen:
Zuweisen der Verstärkung von eins zu einem Audioobjekt in der Liste, das einem höchsten Prioritätswert entspricht, und der Verstärkung von null zu einem anderen Audioobjekt in der Liste, das einem niedrigsten Prioritätswert entspricht, wobei das Zuweisen der Verstärkung null anzeigt, dass das andere Audioobjekt aus dem Audioinhalt entfernt wird; und
Zuweisen der Verstärkung eines von Null verschiedenen Werts zu dem Audioobjekt, das einem niedrigsten Prioritätswert entspricht, und der Verstärkung von eins zu einem Audioobjekt, das einem höchsten Prioritätswert entspricht, wobei das Zuweisen der Verstärkung des von Null verschiedenen Werts anzeigt, dass ein Effekt des Audioobjekts geändert wird;
Berechnen der Verstärkung, die mit einem oder mehreren Audioobjekten in der Liste außer dem Audioobjekt mit dem höchsten Prioritätswert und dem anderen Audioobjekt mit dem niedrigsten Prioritätswert assoziiert ist, basierend auf der Verstärkung, die mit dem Audioobjekt mit einem Prioritätswert höher als dem der einen oder mehreren Audioobjekte assoziiert ist, und der Verstärkung, die mit dem Audioobjekt mit einem Prioritätswert niedriger als dem der einen oder mehreren Audioobjekte assoziiert ist; und
Durchführen einer gewichteten Summierung der mit jedem Audioobjekt in der Liste assoziierten Verstärkung, um den Audioinhalt zu modifizieren.

10. Verfahren nach Anspruch 1, ferner umfassend:
Empfangen des Audioinhalts als Eingabe;
Aufteilen des Audioinhalts in die Vielzahl von Audioobjekten; und
Bestimmen einer Audioobjekt-Emotionsstufe für jedes Audioobjekt aus der Vielzahl von Audioobjekten.

11. Verfahren nach Anspruch 10, wobei das Aufteilen des Audioinhalts in die Vielzahl von Audioobjekten Folgendes umfasst:
Erzeugen eines vorverarbeiteten Audioinhalts durch Vorverarbeitung der Eingabe;
Erzeugen einer Ausgabe durch Einspeisen des vorverarbeiteten Audioinhalts in ein Quellenaufteilungsmodell; und
Erzeugen der Vielzahl von mit dem Audioinhalt assoziierten Audioobjekten aus dem Audioinhalt durch Nachverarbeitung der Ausgabe.

12. Verfahren nach Anspruch 10, wobei die Audioobjekt-Emotionsstufe jedes Audioobjekts wie folgt bestimmt wird:
Bestimmen eines oder mehrerer Audio-Merkmale, die mit jedem Audioobjekt assoziiert sind,
wobei das eine oder die mehreren Audio-Merkmale mindestens eines der folgenden Elemente umfassen: eine Grundfrequenz, eine zeitliche Variationscharakteristik einer Frequenz, einen mit einer Amplitude assoziierten Effektivwert, RMS-Wert, und eine Sprachgeschwindigkeit, die mit jedem Audioobjekt assoziiert sind;
Bestimmen eines Emotionswahrscheinlichkeitswerts jedes Audioobjekts basierend auf dem einen oder den mehreren Audio-Merkmale; und
Bestimmen der Audioobjekt-Emotionsstufe jedes Audioobjekts basierend auf dem Emotionswahrscheinlichkeitswert.

13. System (202) zur Modifizierung von Audioinhalt für Zuhörer, wobei das System (202) Folgendes umfasst:
eine Engine (222) zur Bestimmung eines scharfen Emotionswerts, die so konfiguriert ist, dass sie einen scharfen Emotionswert, der eine Audioobjekt-Emotion definiert, für jedes Audioobjekt aus einer Vielzahl von Audioobjekten, die mit dem Audioinhalt assoziiert sind, bestimmt (102), wobei das Bestimmen des scharfen Emotionswerts für jedes Audioobjekt Folgendes umfasst:
Abbilden einer Audioobjekt-Emotion für jedes Audioobjekt auf eine gemeinsame Skala, um einen Bereich der Audioobjekt-Emotion in jedem Audioobjekt zu bestimmen, wobei die gemeinsame Skala eine Vielzahl von Grundemotionen umfasst;
Bestimmen eines Bias für die Audioobjekt-Emotion für jedes Audioobjekt, wobei der Bias ein Minimalwert des Bereichs auf der gemeinsamen Skala ist; und
Addieren einer mit jedem Audioobjekt assoziierten und auf die gemeinsame Skala abgebildeten Audioobjekt-Emotionsstufe zu dem Bias, um den scharfen Emotionswert für jedes Audioobjekt zu bestimmen;
eine adaptive Kompositionsfaktor-Bestimmungsengine (224), die so konfiguriert ist, dass sie einen Kompositionsfaktor bestimmt (104), der eine oder mehrere Grundemotionen im scharfen Emotionswert jedes Audioobjekts aus der Vielzahl von Grundemotionen repräsentiert; und
eine Audioobjekt-Modifizierungsengine (226), die so konfiguriert ist, dass sie:
eine Wahrscheinlichkeit berechnet (106), dass ein Zuhörer mit jeder der einen oder mehreren im Kompositionsfaktor repräsentierten Grundemotionen assoziiert ist;
einen mit jedem Audioobjekt assoziierten Prioritätswert berechnet (108), basierend auf der Wahrscheinlichkeit, dass der Zuhörer mit jeder der einen oder mehreren im Kompositionsfaktor jedes Audioobjekts repräsentierten Grundemotionen assoziiert ist, und auf dem Kompositionsfaktor jedes Audioobjekts;
eine Liste erzeugt (110), die die Vielzahl von Audioobjekten umfasst, die in einer spezifizierten Reihenfolge unter Verwendung des Prioritätswerts jedes Audioobjekts aus der Vielzahl von Audioobjekten angeordnet sind; und
den Audioinhalt durch Einstellen einer Verstärkung mindestens eines Audioobjekts aus der Vielzahl von Audioobjekten in der Liste basierend auf dem Prioritätswert modifiziert (112).

14. Nichtflüchtiges, computerlesbares Speichermedium, das Befehle umfasst, die, wenn sie von einem Computer ausgeführt werden, den Computer veranlassen, die Schritte des Verfahrens nach Ansprüche 1 bis 12 durchzuführen.

## Revendications

1. Procédé de modification de contenu audio, le procédé comprenant :
déterminer (102) une valeur d'émotion précise définissant une émotion d'objet audio, pour chaque objet audio parmi une pluralité d'objets audio associés à un contenu audio, la détermination de la valeur d'émotion précise pour chaque objet audio consiste à :
mapper une émotion d'objet audio pour chaque objet audio sur une échelle commune afin de déterminer une plage de l'émotion d'objet audio pour chaque objet, l'échelle commune comprenant une pluralité d'émotions de base ;
déterminer un biais pour l'émotion d'objet audio pour chaque objet audio, le biais étant une valeur la plus basse de la plage sur l'échelle commune ; et
ajouter un niveau d'émotion d'objet audio associé à chaque objet audio mappé sur l'échelle commune au biais afin de déterminer la valeur d'émotion précise pour chaque objet audio ;
déterminer (104) un facteur de composition représentant une ou plusieurs émotions de base dans la valeur d'émotion précise de chaque objet audio parmi la pluralité d'émotions de base ;
calculer (106) une probabilité qu'un auditeur s'associant à chacune de l'une ou plusieurs émotions de base représentées dans le facteur de composition ;
calculer (108) une valeur de priorité associée à chaque objet audio sur la base de la probabilité que l'auditeur s'associe à chacune de l'une ou plusieurs émotions de base représentées dans le facteur de composition et du facteur de composition de chaque objet audio ;
générer (110) une liste comprenant la pluralité d'objets audio agencés dans un ordre spécifié en utilisant la valeur de priorité de chaque objet audio parmi la pluralité d'objets audio ; et
modifier (112) le contenu audio en ajustant un gain d'au moins un objet audio parmi la pluralité d'objets audio dans la liste, sur la base de la valeur de priorité.

2. Procédé selon la revendication 1, comprenant en outre :
générer un contenu audio modifié en combinant une pluralité d'objets audio modifiés.

3. Procédé selon la revendication 1, dans lequel l'échelle commune est l'une d'une échelle hédonique et d'une échelle arousale.

4. Procédé selon la revendication 1, dans lequel la détermination du facteur de composition consiste à :
mapper la valeur d'émotion précise de chaque objet audio sur une échelle de noyau comprenant une pluralité de noyaux d'émotion adaptatifs représentant la pluralité d'émotions de base,
dans lequel le facteur de composition est basé sur une contribution de l'une ou plusieurs émotions de base parmi la pluralité d'émotions de base représentées par un ou plusieurs noyaux d'émotion adaptatifs dans la valeur d'émotion précise de chaque objet audio.

5. Procédé selon la revendication 4, comprenant en outre :
obtenir une pluralité de paramètres de rétroaction associés à l'auditeur à partir d'au moins l'un d'une mémoire et de l'auditeur en temps réel ; et
ajuster une taille d'au moins un noyau d'émotion adaptatif parmi la pluralité de noyaux d'émotion adaptatifs sur la base de la pluralité de paramètres de rétroaction.

6. Procédé selon la revendication 4, dans lequel la contribution de l'une ou plusieurs émotions de base est déterminée sur la base du mappage de la valeur d'émotion précise de chaque objet audio sur l'un ou plusieurs noyaux d'émotion adaptatifs.

7. Procédé selon la revendication 1, dans lequel le calcul de la probabilité que l'auditeur s'associe à chacune de l'une ou plusieurs émotions de base représentées dans le facteur de composition est basé sur au moins l'un des suivants :
une pluralité de paramètres de rétroaction associés à l'auditeur stockés dans une mémoire ; et
un rapport d'une surface d'un ou plusieurs noyaux d'émotion adaptatifs correspondant à chaque émotion représentée dans le facteur de composition à une surface totale d'une pluralité de noyaux d'émotion adaptatifs de la pluralité d'émotions de base.

8. Procédé selon la revendication 5 ou 7, dans lequel la pluralité de paramètres de rétroaction comprend au moins l'une parmi une rétroaction visuelle, une rétroaction de capteur, une rétroaction antérieure et une rétroaction manuelle associées à l'auditeur.

9. Procédé selon la revendication 1, dans lequel le calcul de la valeur de priorité pour chaque objet audio comprend :
effectuer une sommation pondérée de la probabilité que l'auditeur s'associe à chacune de l'une ou plusieurs émotions de base représentées dans le facteur de composition et du facteur de composition représentant l'une ou plusieurs émotions de base ;
et/ou dans lequel la modification du contenu audio en ajustant le gain d'au moins un objet audio consiste à :
effectuer un ou plusieurs des suivants :
attribuer un gain de un à un objet audio dans la liste correspondant à une valeur de priorité la plus élevée et un gain de zéro à un autre objet audio dans la liste correspondant à la valeur de priorité la plus basse, l'attribution du gain de zéro indiquant que l'autre objet audio est supprimé du contenu audio ; et
attribuer un gain d'une valeur non zéro à l'objet audio correspondant à une valeur de priorité la plus basse et un gain de un à un objet audio correspondant à une valeur de priorité la plus élevée, l'attribution du gain de la valeur non zéro indiquant qu'un effet sur l'objet audio est modifié ;
calculer le gain associé à un ou plusieurs objets audio dans la liste autres que l'objet audio ayant la valeur de priorité la plus élevée et l'autre objet audio ayant la valeur de priorité la plus basse sur la base du gain associé à l'objet audio ayant une valeur de priorité supérieure à celle de l'un ou plusieurs objets audio et le gain associé à l'objet audio ayant une valeur de priorité inférieure à celle de l'un ou plusieurs objets audio ; et
effectuer une sommation pondérée du gain associé à chaque objet audio dans la liste pour modifier le contenu audio.

10. Procédé selon la revendication 1, comprenant en outre :
recevoir le contenu audio comme entrée ;
diviser le contenu audio en la pluralité d'objets audio ; et
déterminer un niveau d'émotion d'objet audio pour chaque objet audio parmi la pluralité d'objets audio.

11. Procédé selon la revendication 10, dans lequel la division du contenu audio en la pluralité d'objets audio consiste à :
générer un contenu audio prétraité en prétraitant l'entrée ;
générer une sortie en fournissant le contenu audio prétraité vers un modèle de division de sources ; et
générer la pluralité d'objets audio associés au contenu audio à partir du contenu audio en post-traitant la sortie.

12. Procédé selon la revendication 10, dans lequel la détermination du niveau d'émotion d'objet audio de chaque objet audio consiste à :
déterminer une ou plusieurs caractéristiques audio associées à chaque objet audio,
l'une ou plusieurs caractéristiques comprenant au moins l'une parmi une fréquence de base, une caractéristique de variation temporelle d'une fréquence, une valeur d'écart type, RMS, associée à une amplitude, et une vitesse de voix associée à chaque objet audio ;
déterminer une valeur de probabilité d'émotion pour chaque objet audio sur la base de l'une ou plusieurs caractéristiques audio ; et
déterminer le niveau d'émotion d'objet audio de chaque objet audio sur la base de la valeur de probabilité d'émotion.

13. Système (202) de modification d'un contenu audio pour un auditeur, le système (202) comprenant :
un moteur de détermination de valeur d'émotion précise (222) configuré pour déterminer (102) une valeur d'émotion précise définissant une émotion d'objet audio, pour chaque objet audio parmi pluralité d'objets audio associés à un contenu audio, la détermination de la valeur d'émotion précise pour chaque objet audio consiste à :
mapper une émotion d'objet audio pour chaque objet audio sur une échelle commune afin de déterminer une plage de l'émotion d'objet audio pour chaque objet, l'échelle commune comprenant une pluralité d'émotions de base ;
déterminer un biais pour l'émotion d'objet audio pour chaque objet audio, le biais étant une valeur la plus basse de la plage sur l'échelle commune ; et
ajouter un niveau d'émotion d'objet audio associé à chaque objet audio mappé sur l'échelle commune au biais afin de déterminer la valeur d'émotion précise pour chaque objet audio ;
un moteur de détermination de facteur de composition adaptatif (224) configuré pour déterminer (104) un facteur de composition représentant une ou plusieurs émotions de base dans la valeur d'émotion précise de chaque objet audio parmi la pluralité d'émotions de base ; et
un moteur de modification d'objet d'intérêt (226) configuré pour :
calculer (106) une probabilité qu'un auditeur s'associant à chacune de l'une ou plusieurs émotions de base représentées dans le facteur de composition ;
calculer (108) une valeur de priorité associée à chaque objet audio sur la base de la probabilité que l'auditeur s'associe à chacune de l'une ou plusieurs émotions de base représentées dans le facteur de composition de chaque objet audio et du facteur de composition de chaque objet audio ;
générer (110) une liste comprenant la pluralité d'objets audio dans un ordre spécifié en utilisant la valeur de priorité de chaque objet audio parmi la pluralité d'objets audio ; et
modifier (112) le contenu audio en ajustant un gain d'au moins un objet audio parmi la pluralité d'objets audio dans la liste, sur la base de la valeur de priorité.

14. Support de stockage non transitoire lisible par ordinateur stockant des instructions qui, lorsqu'elles sont exécutées par un ordinateur, amènent l'ordinateur à mettre en œuvre les étapes du procédé selon les revendications 1 à 12.
